(19) Europäisches Patentamt / European Patent Office / Office européen des brevets

(11) **EP 3 148 224 A2**

(12) **EUROPEAN PATENT APPLICATION**

(43) Date of publication:
**29.03.2017 Bulletin 2017/13**

(51) Int Cl.:
***H04S 7/00*** (2006.01)

(21) Application number: **16187214.8**

(22) Date of filing: **05.09.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD** | (71) Applicant: **Music Group IP Ltd.**<br>**Tortola (VG)**<br><br>(72) Inventor: **Skovenborg, Esben**<br>**8000 Aarhus C (DK)**<br><br>(74) Representative: **Patentgruppen A/S**<br>**Aaboulevarden 31, 4**<br>**8000 Aarhus C (DK)** |
| (30) Priority: **04.09.2015 DK 201570576** | |

(54) **METHOD FOR DETERMINING OR VERIFYING SPATIAL RELATIONS IN A LOUDSPEAKER SYSTEM**

(57)    A method for determining spatial relations in a loudspeaker system comprising a central controller, multiple loudspeakers and multiple microphones. The method comprises using the multiple loudspeakers to produce sound and using the multiple microphones to measure the produced sound. Spatial relations between the loudspeakers are determined based on the measured sound, and the multiple loudspeakers are assigned to loudspeaker zones based on the determined spatial relations. Audio of the multiple loudspeakers is controlled in accordance with the assigned loudspeaker zones. Further, a method for verifying the installation of such a loudspeaker system, and a loudspeaker system with zoning and/or verification.

Fig. 7

EP 3 148 224 A2

## Description

### Field of the invention

The present invention relates to determining or verifying layouts of loudspeaker installations.

### Background of the invention

Many installation loudspeaker systems are installed with no or little plan for the specific layout of the system and spatial arrangement of the loudspeakers. The installer, e.g. an electrician, often simply distributes the loudspeakers where they fit best, look nice, or are basically easiest to install. Frequently, the resulting layout is not documented very well. Other installation projects may have been thoroughly planned, but the installer for some reason or another decides to depart from the plans with respect to e.g. number or type of speakers, precise mounting locations, etc. Again, the documentation of such changes may not always be adequate.

It may, however, at some point in time, become relevant to determine more reliably the location or spatial distribution of the loudspeakers, for example when considering partitioning the loudspeaker system into zones for operating subsets of the loudspeakers differently, or if the party having ordered the loudspeaker system wants to verify that the installer has in fact installed to specs.

When systems have been installed with insufficient documentation as described above, a desire for zoning, verification or individual control leaves no other possibilities for the user than to walk around among the loudspeakers until he feels confident that he has discovered and mapped them all.

Even if determined to produce thorough documentation, the common installation and operation procedures are highly inefficient, as the necessary documentation may involve for possibly hundreds of loudspeakers that their serial numbers are written down together with their location, and level and zoning configuration switches (where applicable) are set, all of which have to be performed and verified manually during installation.

### Summary of the invention

The inventor has identified the above-mentioned causes for error or inefficiency of installing and operating known loudspeaker systems, and invented new and useful methods for determining spatial relations between loudspeakers and/or between loudspeakers and rooms, or verifying that a loudspeaker system installation is proper. Moreover the inventor has found an inventive way to make the task of assigning loudspeakers to zones more efficient or, in an embodiment, even automatic.

In one aspect the invention relates to a method for determining spatial relations in a loudspeaker system comprising a central controller, multiple loudspeakers and multiple microphones, the method comprising using the multiple loudspeakers to produce sound; using the multiple microphones to measure said sound; determining spatial relations between said loudspeakers on the basis of the measured sound; assigning said multiple loudspeakers to loudspeaker zones on the basis of said determined spatial relations; and controlling audio of said multiple loudspeakers in accordance with said assigned loudspeaker zones.

The present invention is highly advantageous for use in connection with installation of a loudspeaker system. When all the loudspeakers of the loudspeaker system have been installed in for example a building with several rooms, each comprising several loudspeakers and often with different requirements to audio content or sound pressure in the different rooms, an embodiment of the invention may be employed to determine which loudspeakers belong together in which rooms, assign them to zones, and control the audio individually for each zone. Likewise, when having installed several loudspeakers in a large room such as a big restaurant, a large lobby or hall, or for example a sports- or shopping centre, often with different requirements to audio content or sound pressure in different sections of the large room, an embodiment of the invention may be employed to determine which loudspeakers have been installed in which parts of the room, assign them to zones, and control the audio individually for each zone.

Thus, the loudspeakers may be installed without first having to configure them individually as belonging to one or more zones, and without the installer having to maintain a chart of the serial-number or other identifier of the individual loudspeakers while installing them. This information may be provided "post hoc" by the present invention.

In an advanced embodiment, the assigned zones may not be static or permanent, but may be changed according to the application of the room or hall. Applications such as "live concert", "conference", or "lounge bar" may require the loudspeakers to fulfil different roles.

The multiple loudspeakers may be connected to conventional amplifiers, wired or wireless loudspeaker networks, powered or non-powered audio buses, etc., or combinations thereof, in any arbitrary network topology. They are directly or indirectly controlled by the central controller, with respect to the audio they get to render. The central controller may for example be transmitting audio to the loudspeakers, or may instruct the loudspeakers to render specific audio or audio addressing a specific loudspeaker zone or other grouping.

The spatial relations may for example be absolute or relative distances, for example determined from time-of-flight ToF, time difference of arrival TDOA, and/or the amplitude- or frequency-response, or similar techniques, based on the measured sound. The spatial relations may also or alternatively comprise information about relative or absolute angles, or other spatial information.

According to the method, the spatial relations are used to assign the loudspeakers to loudspeaker zones. This may for example be performed by considering patterns of the spatial relations, like a number of loudspeakers being located significantly closer together than to another group of loudspeakers, or a subset of the microphones not being able to pick up any sound or only weak or distant sound from a certain group of loudspeakers, leading to a probable assumption that these loudspeakers are in a different environment, e.g. room or location, than the subset of microphones.

The step of controlling audio of the loudspeakers based on the loudspeaker zones may for example comprise making loudspeakers assigned to different loudspeaker zones to render different audio content or apply different gain or processing, resulting in different sound pressure in the two zones. The controlling of audio may preferably be performed directly or indirectly by the central controller.

An advantageous embodiment is obtained when said spatial relations comprises distances.

In a preferred embodiment, spatial relations between the speakers and microphones comprise distances for example determined from differences in time of flight of the sound.

An advantageous embodiment is obtained when said spatial relations comprises a spatial arrangement.

According to an embodiment when a sufficient number of loudspeaker spatial relations have been determined, they make up a spatial arrangement, i.e. a layout of the loudspeaker locations in the loudspeaker system. The analysis of loudspeaker spatial relations to determine a spatial arrangement may comprise two-dimensional or three-dimensional modelling.

The method may produce a map or chart, graphically or by definition, of the layout of - possibly numerous - loudspeakers. The map is preferably generated automatically, i.e. without manual assistance from an operator. In an embodiment the loudspeakers are connected to a central controller, capable of playing sounds through each loudspeaker. The generated map may contain the relative positions of the loudspeakers. The map could also contain a scale and approximate distances between the loudspeakers.

An advantageous embodiment is obtained when said spatial arrangement is complemented by auxiliary information.

The auxiliary information may for example comprise an absolute location or reference of one of the loudspeakers, e.g. "the north-east corner of the room", a geographic or floor plan coordinate, etc., so that the method may better determine an absolute layout, or a layout related to e.g. a floor plan. Such auxiliary information may be provided before or after the sound measurement etc. The auxiliary information may also comprise operator-driven adjusting or correcting the spatial arrangement provided automatically by the present invention, such that the subsequent assignment of zones may be improved. Another example of auxiliary information may comprise information, e.g. from floor plan data or input by an operator, about characteristics, e.g. about absorption, reflection and reverberation properties, of for example rooms, walls, floors, furniture, irregular shaped rooms, etc., which the method may use when interpreting the measured sound for determining spatial relations.

An advantageous embodiment is obtained when said loudspeakers are stationary.

Embodiments of the present invention are highly advantageous in mapping and configuring installed loudspeaker systems, i.e. systems comprising multiple loudspeakers mounted on or in ceilings, walls, pillars, etc.

An advantageous embodiment is obtained when said microphones are stationary.

An advantageous embodiment is obtained when said microphones are individually located together with individual of said loudspeakers.

In a preferred embodiment each loudspeaker casing is equipped with a microphone. Thereby the measurements by a microphone may be considered a measurement between two loudspeakers, thus directly providing a measure of a spatial relation between those two loudspeakers. Further, by locating the microphones with the loudspeakers, the sound produced by a loudspeaker is measured by its own microphone and a fraction of a second later by other microphones. The spatial relations may thereby be determined using the first measurement as reference for the time of departure of a wave front, instead of relying on a timing from inside an audio network or digital audio processing, which inherently introduces a little delay.

The microphones are preferably dedicated microphones, and various embodiments uses microphones of varying quality, spectrum and sensitivity. In some embodiments even very cheap microphones or sound sensors may be used, as such embodiments may focus primarily on determining the first detection of a sound wave front, e.g. direct sound or low-order reflection, at the location of the microphone. Hence the signal-to-noise ratio or frequency response of the microphone may not be important.

In another embodiment, the loudspeakers may themselves be used as microphones with appropriate circuitry known in the art between the amplifier and loudspeaker to discern incoming sound signals from the amplifier output signal. For example, one loudspeaker at the time may be producing sound, while the other loudspeakers are used to measure the sound.

An advantageous embodiment is obtained when said microphones are arranged in a pre-determined array.

Such a microphone array may determine the direction and the distance to each of the loudspeakers, based on the sound they produce, and hence their spatial relations. This method comprises analysing the signals from essentially all the microphones together and incorporating the knowledge of the spatial interrelations of the microphones within the array.

An advantageous embodiment is obtained when said method further comprises determining a spatial relation between a loudspeaker and a reflective surface and a microphone and said reflective surface.

In a preferred embodiment, the analysis is arranged to determine spatial relations even based on low-order reflections, i.e. sound being reflected off one surface before reaching the microphone. This may be used to determine at least some of the surfaces of an environment to for example provide an indication of the position of the loudspeakers in a room. Another use of this feature is to determine a spatial arrangement of the loudspeakers even when some loudspeakers have no direct acoustical path, e.g. because of an L-shaped room or hallway. Yet another use is if the loudspeakers are mounted deep inside some enclosure providing a loudspeaker directionality with a very high attenuation at around 90 degrees.

An advantageous embodiment is obtained when said method further comprises determining a spatial arrangement of a reflective surface reflecting said produced sound.

The method may in an embodiment take into account one or more neighboring surfaces such as a wall, floor, or ceiling, the distance to which may be estimated by means of the acoustic reflections of said produced sound against said surface.

An advantageous embodiment is obtained when a spatial relation between said loudspeakers and an opposite reflective surface is determined, and wherein said spatial arrangement is further determined on the basis thereof.

For example, in an embodiment, multiple loudspeakers may be mounted in the ceiling of a room, in which case the opposite reflective surface would be the floor. Thus, providing a spatial relation, preferably a distance, between the loudspeakers and the floor (i.e. the floor-to-ceiling-height) may facilitate the method to more accurately determine a spatial arrangement of the loudspeakers, even in cases where a direct sound would not be clearly received.

An advantageous embodiment is obtained when said spatial arrangement is determined on the basis of the most significant of said spatial relations.

For example, those estimated distances corresponding to the weakest of the measured received sounds or simply the longest (estimated) distances may be excluded from the modelling of the layout of the loudspeaker setup. Furthermore, each spatial relation, e.g. an estimated distance, may preferably be accompanied by an uncertainty of that estimate, and hence the most uncertain distances could be excluded from the actual layout computation. Thus, the resulting determined spatial arrangement may be more accurate even though based on fewer distances.

An advantageous embodiment is obtained when said method further comprises determining a spatial arrangement of at least a part of an aggregated environment comprising said loudspeaker system, the aggregated environment comprising one or more environments.

An aggregated environment comprises a set of environments each comprising one or more of the loudspeakers of the loudspeaker system. Each environment comprises a physical area e.g. a hallway, a conference room, a restaurant or a similar physically delimited environment. In other words, the environments are defined by physical structures serving as acoustical and/or visual obstacles such as walls, floors and ceilings, doors and windows, partitions, plants, curtains, or even relatively large distances of space. The aggregated environment may thereby for example be an office building, restaurant building, etc., comprising a set of environments. The aggregated environment is limited to the aggregation of environments comprising loudspeakers of the loudspeaker system, and may thus be limited to a part of a building, floor, etc., and comprise a single environment or several environments. The loudspeaker system may comprise loudspeakers installed in one or more environments. The topology of the loudspeaker system in terms of electrical or communicative connections may often be quite unrelated to the topology of the environments.

In a preferred embodiment the sound measurements may be analysed for information about acoustic obstacles obtained by analysing when certain microphones do not receive or only vaguely or distantly receive the sound from certain loudspeakers, thereby enabling a grouping of the loudspeakers in different of said environments; as well as information about reflective surfaces enabling estimating distances between loudspeakers and reflective surfaces, thereby making it possible in certain embodiments to estimate the physical dimensions in two or three dimensions of the environments, e.g. the physical dimensions and shape of a room.

An advantageous embodiment is obtained when said assigning to loudspeaker zones is based on said determined spatial arrangement of at least a part of an aggregated environment.

In an advantageous embodiment the automatically determined information about environments may be used to make a basic suggestion or basic starting configuration for how the loudspeakers should be divided into loudspeaker zones for the subsequent normal operation. In many practical applications of the embodiment the basic starting configuration established this way will be perfectly suited for most uses.

The topology of the environments may not necessarily correspond to the topology of the loudspeaker zones. In other words, network-topology, loudspeaker connections, environments and loudspeaker zones are non-constrained, but at least partly overlapping.

An advantageous embodiment is obtained when said method further comprises determining a spatial arrangement of said loudspeaker zones.

In an embodiment the spatial relations of the loudspeaker zones may also be determined and provided for information.

An advantageous embodiment is obtained when the loudspeakers are pre-assigned to loudspeaker zones, and wherein the step of assigning said multiple loudspeakers to loudspeaker zones comprises verifying whether the pre-assignment for a loudspeaker to a loudspeaker zone matches an assignment based on said determined spatial relations.

In an advantageous embodiment the loudspeakers may comprise a hardware selector and/or a programmable memory, which the installer may use to set a pre-assignment to the a loudspeaker zone during installation. However, such pre-assignment is prone to human error and/or change of mind after closing off the installation, ceiling, wall, etc., and an embodiment comprising a verification of the pre-assignment is therefore very advantageous. The hardware selector may for example comprise a DIP-switch, a rotary encoder, etc.

An advantageous embodiment is obtained when said sound is produced by multiple loudspeakers simultaneously, and the spectral content of the individual sounds are substantially different.

By spectral content (of the produced sound) is understood frequency-domain content of the signal, i.e. the power per frequency-interval. Spectral content is considered different for two loudspeakers when the frequency spectrum of one loudspeaker, for some time period, differs significantly from the frequency spectrum of the other loudspeaker, for the same time period.

The determination of spatial relations may be performed very efficiently in embodiments where the loudspeakers produce sound simultaneously, either a few together or even all loudspeakers of the loudspeaker system. Embodiments may provide for the loudspeakers repeating the producing and measuring a few times to increase the reliability, but even in that case the efficiency may be greatly improved compared to a sequential and iterative approach in loudspeaker systems with many loudspeakers.

An advantageous embodiment is obtained when said produced sound is selected to be optimized with respect to maxima of a cross-correlation function based on pairs of said measured sounds.

In a preferred embodiment it may be advantageous to use relatively 'short' sounds, in particular in a reverberant environment. The 'short' sounds, i.e. sounds of short duration, such as noise bursts, may be well suited to obtain a cross-correlation function with distinct maxima, from which a corresponding distance may be estimated. Both the level, the frequency content, and the envelope of the sounds may be optimised. The optimisation could take place in advance, or on-line, taking into account the received sounds in the actual acoustic environment. For instance, a short sound, possibly repeated, may yield more accurate measurements than a longer sound, of similar total duration.

An advantageous embodiment is obtained when said individual sound comprises embedded information of an identifier of said loudspeaker.

Such an identifier may for example be a serial number, an audio bus address, a network node identification, and/or an IP address. By transmitting an identifier with the sound to be measured, the controller may be able to map the individual loudspeaker identities to the spatial arrangement determined by the method, thereby facilitating referring to a loudspeaker by reference to the location in the spatial arrangement, which is typically more convenient to an end user than the loudspeaker identifier. The knowledge about which loudspeaker identity is involved in which measurements may also be used to improve the determining spatial relations, as it for example enables repeating a measurement if first result was unexpected, or applying, after the identity is obtained, individual audio processing or sound profiles to individual loudspeakers in special environments, for example selecting a specific sound suitable for hard environments, soft environments, rooms with no direct path between all speakers, noisy environments, sensitive environments, etc., to improve the first measurements. The embedding of the identifier information into the sound may be achieved in a number of ways, known in the art, e.g. by modulation or audio watermarking.

An advantageous embodiment is obtained when the method comprises providing a mobile device controlled by an operator and measuring said sound by said mobile device.

The mobile device, such as a smartphone or tablet computer, may identify the loudspeaker producing the sound, while the operator hears the same sound. Hence, the operator may add additional information, and/or correct or adjust the information estimated by the method of determining spatial relations.

An advantageous embodiment is obtained when the loudspeaker system comprises one or more powered audio buses and associated bus drivers, the multiple loudspeakers being comprised by loudspeaker nodes of said powered audio buses, and the central controller being connected to or integrated with said bus drivers.

In loudspeaker systems where powered audio buses are used to distribute, interconnect and power loudspeaker nodes comprising amplifiers and loudspeakers, embodiments of the present invention may be highly relevant. In some powered audio bus systems, the bus drivers or central controller may know the electrical location in terms of distance or neighbours along the bus cable of the loudspeaker nodes. However, as the loudspeakers and audio bus may be installed according to any arbitrary topology as the typically long buses, for example 20 to 100 meters, turn and twist around above the ceiling in any unpredictable way, it is very advantageous to be able to map the electrically identified loudspeaker nodes with a spatial layout.

An advantageous embodiment is obtained when at least some of the multiple microphones are connected to said powered audio bus for communicating their measurements.

Using a powered audio bus topology with loudspeaker nodes comprising both a loudspeaker and a microphone, enables the above-mentioned advantages of locating the microphones with the loudspeakers, as well as provides a convenient way to communicate with the loudspeakers, e.g. for transmitting audio signals for them to render, as well as the microphones, e.g. for receiving the measured sound or a formalised or analysed version thereof.

In one aspect the invention relates to a loudspeaker system with automatic zoning, comprising multiple loudspeakers and multiple microphones; a sound measurement analyzer arranged to determine spatial relations between said loudspeakers based on sound produced by said loudspeakers and measured by said microphones; a zoning unit arranged to assign said multiple loudspeakers to loudspeaker zones on the basis of spatial relations received from the sound measurements analyzer; and a central controller arranged to control sound of said multiple loudspeakers in accordance with the assigned zone.

The loudspeaker system with automatic zoning may advantageously be combined with any of the above-described features and embodiments of a method to determine spatial relations to achieve the advantages described above.

In one aspect the invention relates to a method for verifying a loudspeaker system installation, the loudspeaker system installation comprising a central controller, multiple loudspeakers and multiple microphones; the method comprising: obtaining auxiliary information; using the multiple loudspeakers to produce sound; using the multiple microphones to measure said sound; verifying the loudspeaker system installation on the basis of said auxiliary information and said measured sound; and providing at a user interface or communication interface a result of said verifying.

The auxiliary information may be given as input by an operator or provided electronically to a verification system performing the method. The verification may comprise analysing the measured sound and comparing information therefrom with the auxiliary data, for example. The user interface or communications interface may be any suitable user interface, e.g. a local or remote user interface of the loudspeaker system. The result of the verification may or may not have been saved to a storage medium prior to being provided at the user interface.

An advantageous embodiment is obtained when the auxiliary information comprises predetermined reference information associated with the loudspeaker system installation.

The auxiliary information may in an advantageous embodiment comprise details from the system design plan or requirements specification or the like. The auxiliary information may for example simply be the number of loudspeakers expected from the project plan to be present in the entire installation or detailed for each environment, e.g. room. In a more advanced embodiment the auxiliary information may in addition to the number of loudspeakers, also comprise further details about the expected distribution or specific locations of the loudspeakers, or in an installation comprising different loudspeaker models the auxiliary information may comprise information about which models should be present in which rooms.

With predetermined reference information together with the measured sound, it may be possible to verify whether the corresponding parts of the requirements have been met. For example the measured sound may be analysed to determine the number of distinct loudspeakers producing sound, and the verifying step may comprise comparing this measured number of loudspeakers with the number of loudspeakers intended in the installation. By also analysing the measured sound to estimate environments, e.g. floor plan, as described above, an estimate of the number of speakers in each environment may be obtained and compared with the corresponding requirements in the project plan.

In another embodiment, the predetermined reference information may have been obtained at a previous occasion of measuring sound, e.g. months or years before, and comprise estimations of the number of loudspeakers, possibly per environment, possibly spatial relations, etc. By using such reference information in the verification step together with newly measured sounds, it may be possible to determine if a loudspeaker has stopped working, started distorting, or other changes of characteristics, since the reference measurement was performed. Any such failed verification may indicate the need for maintenance of the loudspeaker system, or a specific part thereof.

An advantageous embodiment is obtained when the method comprises a step of determining spatial relations between said loudspeakers on the basis of the measured sound, and wherein said verifying is further based on said spatial relations.

In an advantageous embodiment spatial relations, e.g. spatial arrangements, are estimated as described regarding a method of determining spatial arrangements and/or a loudspeaker system with automatic zoning above, and used for comparison with the auxiliary information, e.g. requirements specification, to verify that the loudspeakers are correctly installed relative to each other and/or their environment.

An advantageous embodiment is obtained when said microphones are individually located together with individual of said loudspeakers.

In a preferred embodiment each loudspeaker casing of the installation is equipped with a microphone. Thereby the verification of an installation may be performed without installing or providing any extra equipment. If only simple requirements are verified, such as the correct number of loudspeakers, a very simple and cheap microphone may be sufficient for the step of measuring sound, regardless of its frequency response or signal-to-noise ratio.

In one aspect the invention relates to a loudspeaker system with installation verification, comprising multiple loudspeakers and multiple microphones; a central controller comprising memory for storing an auxiliary information; a verification unit arranged to verify a loudspeaker system installation on the basis of said auxiliary information and sound produced by said loudspeakers and measured by said microphones; and a user interface or communication interface arranged to provide a result received from the verification unit.

The loudspeaker system with installation verification may advantageously be combined with any of the above-described features and embodiments of a method to verify a loudspeaker installation to achieve the advantages described above, hereunder also be combined with and benefit from any of the above-described features and embodiments of a method to determine spatial relations and/or a loudspeaker system with automatic zoning, to achieve the advantages described above.

In one aspect the invention relates to a method for determining spatial relations in a loudspeaker system comprising a central controller and multiple loudspeakers, the method comprising: using the multiple loudspeakers to produce sound; using a microphone of a mobile device to measure said sound; determining spatial relations between said loudspeakers on the basis of the measured sound; assigning said multiple loudspeakers to loudspeaker zones on the basis of said determined spatial relations; and controlling audio of said multiple loudspeakers in accordance with said assigned loudspeaker zones.

The method of determining spatial relations using a microphone of a mobile device may advantageously be combined with any of the above-described features and embodiments of a method to determine spatial relations using multiple microphones, the loudspeaker system with automatic zoning, the method to verify a loudspeaker installation and the loudspeaker system with installation verification, to achieve the advantages described above, when exchanging features of multiple microphones for a microphone of a mobile device and/or combining multiple microphones with a microphone of a mobile device.

**The drawings**

The invention will in the following be described with reference to the drawings where

figs. 1a to 1d illustrate a loudspeaker system installation of an embodiment of the invention,
fig. 2 illustrates a subset of a loudspeaker system of an embodiment,
figs. 3a and 3b illustrate sounds recorded during an experiment related to an embodiment,
fig. 4 illustrates the cross-correlation function of the experiment sounds,
fig. 5 illustrates an isosceles triangle,
fig. 6 illustrates various embodiments of zoning according to the invention,
fig. 7 illustrates an embodiment of loudspeaker system installation according to the invention,
fig. 8 (8a-8b) is a flow-chart illustrating an embodiment of a method according to the invention, and
figs. 9 - 17 illustrate various embodiments of a loudspeaker system installation according to the invention.

**Detailed description**

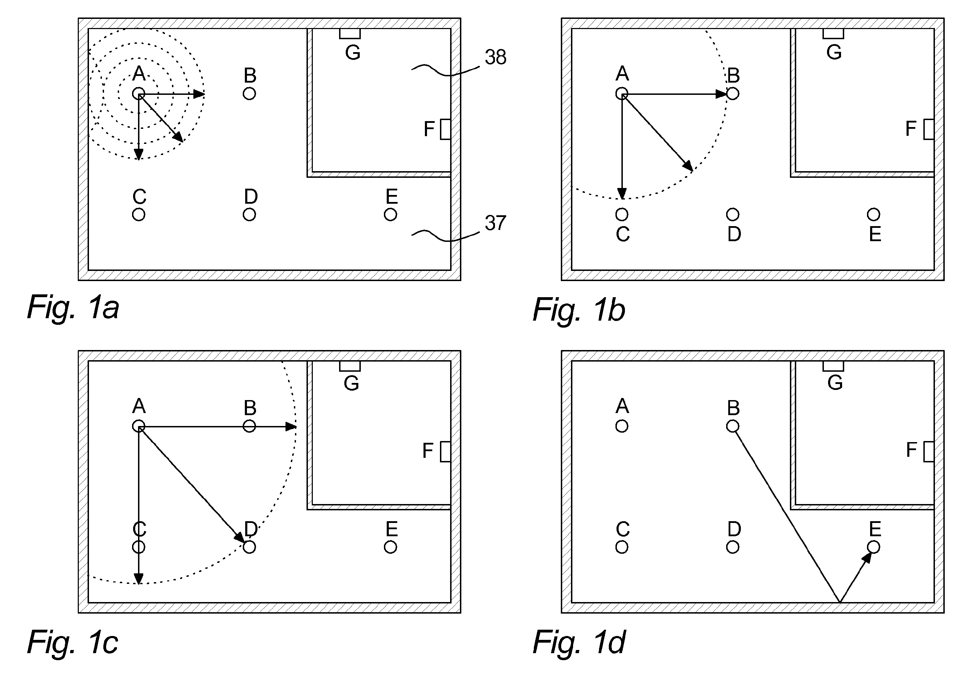

The figures 1a-1d illustrate two environments 37, 38. The environment 37, e.g. a room or hall, seen from above, is bounded by 6 walls and forms an L-shaped room.. Five loudspeakers have been installed in the ceiling of the room 37, denoted A-E, and two loudspeakers have been mounted on the walls of environment 38, denoted F-G. In fig. 1a-1c, the loudspeaker A produces a sound. The dashed circles indicate the expanding wave-front of the sound, originating at A. The arrows indicate the sound waves that will reach microphones located together with the loudspeakers at B, C, and D. Hence each figure represent an "acoustic snapshot" at a point in time.

Fig. 1a also illustrates that the wave is reflected by the walls. Fig 1d show that a sound, produced by loudspeaker B, is first received by microphone E as a first-order reflection, i.e. E does not receive the direct sound from B. The wall-mounted loudspeakers F-G may experience reflections from ceiling, floor and walls, but may on the other hand experience a better direct sound measurement between them, than ceiling-mounted loudspeakers.

It may further be expected from figs. 1a - 1d that microphones located at loudspeakers F-G in environment 38 are not receiving any significant sound from the loudspeakers in room 37, and vice versa, but the microphones at F-G are receiving sounds produced by loudspeakers F-G, thereby verifying that they do in fact work. Hence, it may be possible to determine, based on the microphone measurements, that the loudspeakers A-E are located in a different environment than the loudspeakers F-G.

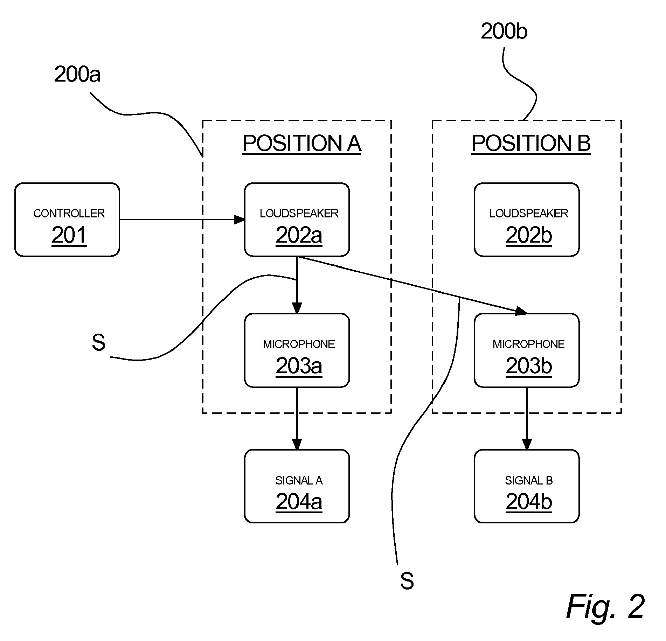

Fig. 2 is a diagram of a subset of a loudspeaker network, focusing on only 2 loudspeakers 202a, 202b at position A 200a and position B 200b. A microphone 203a, 203b is also installed at each loudspeaker. A controller 201 sends a signal to loudspeaker A 202a, which produces a sound S, which is then received by microphone A 203a and microphone B 203b.

For purposes of illustration and analysis, the sounds from the setup of fig. 2 were recorded, denoted Signal A 204a and Signal B 204b. However, the sound measurement may in preferred embodiments be performed in real-time, i.e. online.

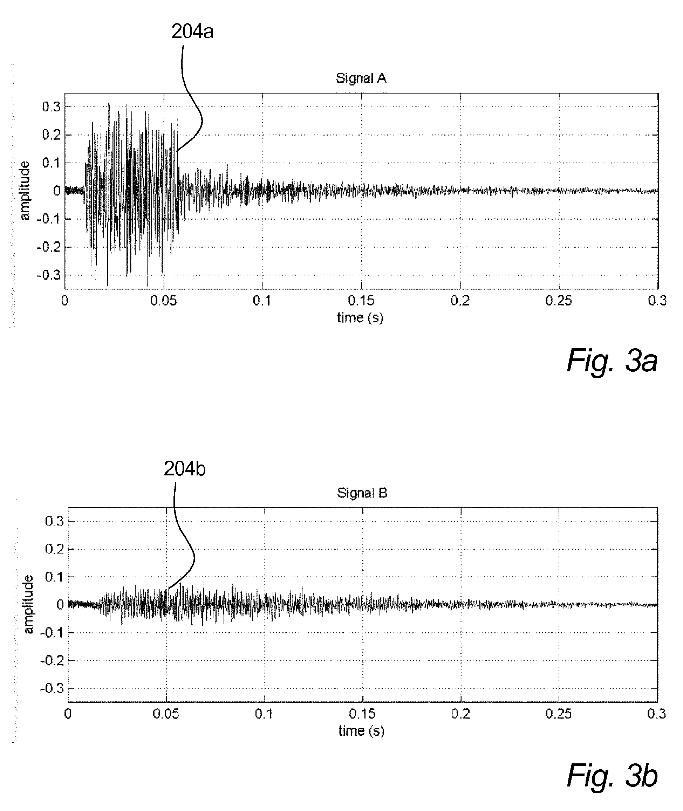

Signal A 204a and Signal B 204b are shown, as amplitude plots in figures 3a and 3b, respectively. The signal was a noise burst of 50 ms duration, followed by 1 s of silence (only the first 0.3 s shown here). The noise was band-limited, and its envelope given a short fade-in and fade-out. The microphone 203a at Position A 200a, being close to loudspeaker A 202a, shows a fairly clean version of the signal 204a, but also background noise (electrical and acoustical), as well as room reverberation following the signal itself. Signal B 204b shows a much more blurry version of the signal played, with more pronounced reverberation, and lower amplitude of the noise burst.

The distance from Position A 200a to Position B 200b may be estimated directly from the envelope of Signal A 204a and Signal B 204b. The envelope may be computed by taking the absolute value of the signal, followed by a median filter or a low-pass filter, or by calculating the Hilbert transform of the signal producing the so-called analytic signal. Figures 3a and 3b indicates how the noise burst Signal B 204b begins around 5 ms later than in Signal A 204a; this "time difference of arrival" corresponds to the distance from Position A to Position B.

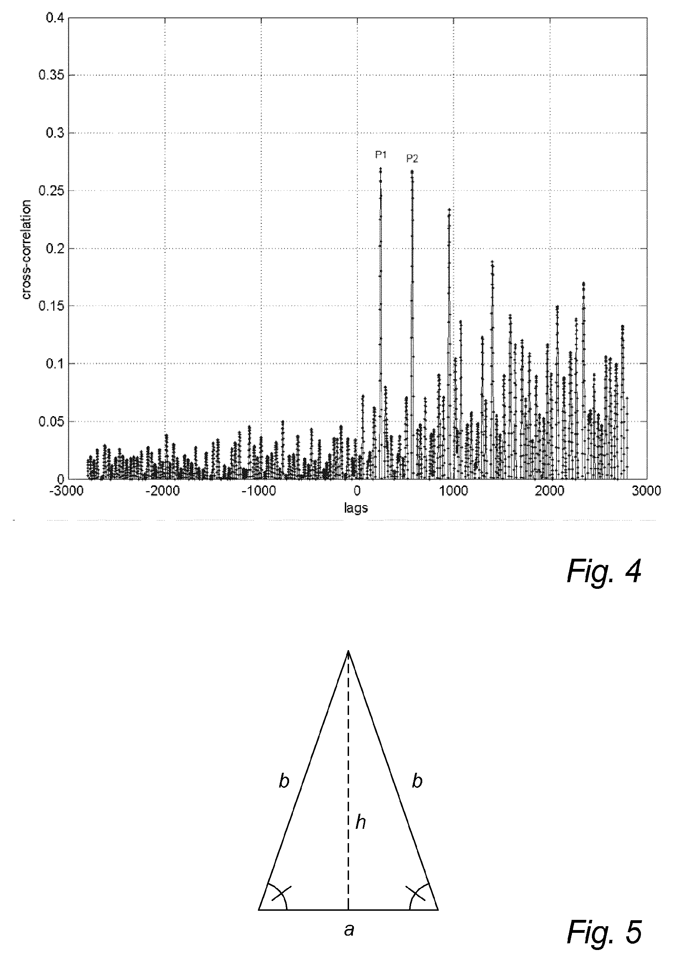

Fig 4 shows the cross-correlation function for discrete-time signals, calculated between Signal A 204a and Signal B 204b, up to 3000 lags. This is a more advanced method of measuring the received sound to calculate the time difference of arrival, than via the envelope.

The first significant peak (P1), which is in this case also the global maximum, is located at lag 239. The speed of sound at 20 °C, in dry conditions, is c = 343 m/s, and the system sampling-rate was fs = 48000 Hz. In Eq. 1, the term offset is the (known) short distance from loudspeaker A to microphone A (offset = 15 cm).

$$\text{Eq. 1} \qquad distance = {lags}/{f_s} * c + offset$$

Hence, according to Eq. 1, P1 corresponds to a distance of 1.868 m. In fact, the distance between A and B was measured (manually) to be 1.86 m.

The specific "shape" of the cross-correlation function also depends on the content of the signal being played; hence the signal may be optimised, e.g. to produce the most pronounced peaks in the cross-correlation function. Both the envelope (e.g. burst duration), the frequency content, and the temporal structure of the signal may have an effect.

If two loudspeakers (A and B) are located at a two-dimensional plane, such as a ceiling, the first-order reflection against a surface opposite the loudspeakers would form an isosceles triangle, like in fig. 5. In this case h would be the height of the loudspeakers (ceiling) above the floor, a would be the distance between the loudspeakers, and 2*b would be the distance travelled by the sound from A to B.

In fig. 4, the peak P2 of the cross-correlation function is at lag 569. Using Eq. 1 again, that corresponds to a distance of 4.22 m. Setting 2*b = 4.22, and using a (predetermined) height of h = 1.89 m, we can isolate the term a, and get a = 1.87 m, according to Eq 2.

$$\text{Eq. 2} \qquad h = \sqrt{b^2 - \frac{1}{4}a^2}$$

This estimated distance, A to B, is almost exactly the same as the estimate based on the direct sound (above). This demonstrates how the distance between two loudspeakers may be determined, even if the direct sound had not been available, e.g. due to physical obstacles - such as between loudspeakers B and E in fig. 1d - or due to a "deep" mounting of the loudspeakers, e.g. in the ceiling.

This principle generalises to comprise more surfaces than one, and when coupled with basic assumptions of the shape of the room, the extra parameters (such as h, above) may be estimated as well, based on a sufficient number of the sound measurements.

Table 1:

|   | A | B | C | D | E |
|---|---|---|---|---|---|
| **A** | - | X | X | O | O |
| **B** | X | - | O | X | O |
| **C** | X | O | - | X | O |
| **D** | O | X | X | - | O |
| **E** | O | O | X | X | - |

Table 1 shows a distance matrix relating to the loudspeaker system illustrated in fig. 1. Each row represents sound produced by one loudspeaker, and the columns represent the microphones receiving the sound. The "-" in the diagonal entries indicate that these distances are excluded as trivial. The entries marked "X" indicate the distances passed on to the method for computing the spatial arrangement. The entries marked "O" indicate a distance that was measured, but subsequently excluded, because it was not among the 2 neighbours with the most significant measurements. The significance could, for instance, be based on the length of the measured distance or the height of the corresponding peak of cross-correlation function, or a combination thereof. By excluding the "less significant" entries, which may relate to reflections, as e.g. the E-B entry, the resulting spatial arrangement may be more accurate even though based on a sparse(r) distance matrix.

The distance matrix, containing the set of pairwise distances, may be analysed using the Multidimensional Scaling algorithm (MDS), known in the art. The MDS operates on a matrix of "dissimilarities" - in this case measured distances - between pairs of items and produces a coordinate matrix whose configuration minimizes a loss function. The Classical MDS, which operates on Euclidean distances, is also known as Principal Coordinates Analysis. These methods may be employed to produce spatial arrangement in either two or three dimensions. The latter may be relevant if the loudspeakers were not all installed on a two-dimensional plane, such as a ceiling.

In an embodiment, the relative coordinates of the loudspeakers, constituting the generated spatial arrangement, may be "anchored" by e.g. an operator providing an absolute or "known" location of one of the loudspeakers. This auxiliary information may be provided before or after the analysis generating the spatial arrangement.

The determined spatial arrangement may be superimposed, i.e. aligned with, an available floor plan or layout drawing of the environment. As preferred embodiments determine a spatial arrangement with (estimated) physical distances (e.g. meter or feet) between the loudspeakers in the arrangement, the determined arrangement may be simply scaled to match the scale of an existing floor plan or drawing. Furthermore, the actual alignment may require rotation and/or mirroring of the determined spatial arrangement. Such rotation/mirroring could be determined automatically using a best-match objective. Alternatively, the user could provide one or more "anchors", as described above.

In an advanced embodiment, the spatial arrangement may comprise surrounding reflective surfaces, such as walls or floor. In this case the distance function, employed in the optimisation comprised by e.g. the MDS, would not be a simple Euclidean distance, but would be extended to take into account both 'direct' distances and 'indirect' distances, such as first-order reflections against a surface. The distance function would then comprise one or more extra parameters corresponding to the relative location of the surface, such as the height (h) in Eq. 2. Extra "indicator variables" may be required to couple each measured reflection with a particular surface, if several were included in the model. The optimisation step would then estimate these extra parameters together with the relative coordinates of the loudspeakers.

An alternative approach to producing the spatial arrangement would be to consider the set of individual spatial relations as a graph, the nodes of which were the loudspeakers and the edges representing the measured distances. Several methods of graph layout algorithms are known in the art, e.g. the Spectral layout method, which may produce the spatial arrangement of the loudspeakers. In this context, reflective surfaces may be represented by adding extra nodes to the graph, with constraints that e.g. the extra nodes belonging to the same surface should be located on the same 2D plane.

Note that the estimation of spatial relations must not necessarily be performed in the steps outlined above, i.e. via a distance matrix etc., but may also be computed e.g. by pre-processing the sounds received from the different microphones, and then analysing all these contributions together.

In an advanced embodiment sound is produced by multiple loudspeakers simultaneously, thus enabling acoustic measurement of several loudspeakers in parallel. This may be achieved by ensuring that the spectral content of the sounds differs for the different loudspeakers. In other words, the frequency spectrum of the individual sounds should be substantially different, for some time period.

The sounds may, for example, have different distinctive amplitude peaks at different frequencies. Alternatively, the spectrum could be split into octaves, where the individual loudspeaker would play in only one of the octaves, for a given period, say one second; the octave assignment could then rotate to allow measurement in a second octave, for each loudspeaker. The sound received by the microphones may be preprocessed by band-pass filtering or basic frequency analysis, known in the art, in order to separate the simultaneous contributions from the multiple loudspeakers.

In an embodiment, a microphone from a mobile device, for example a smartphone or a tablet computer, is used to receive the sound produced by the loudspeakers. With only one microphone, this approach requires the user to move the mobile device between at least two positions, or employ two mobile devices. In another approach, iBeacons, Bluetooth LE or similar simple communication devices are located together with each loudspeaker, and may inform a mobile device with suitable hardware about the loudspeaker identifier and its distance from the mobile device. Thereby, by walking around in the environments with a mobile device having a microphone and suitable detection hardware for the selected beacon technology, and a software application for analyzing the detected distances, the mobile device or, e.g., the central controller if data are forwarded to it, may determine a spatial arrangement of the loudspeakers, or other properties usable for the determining or verification applications described.

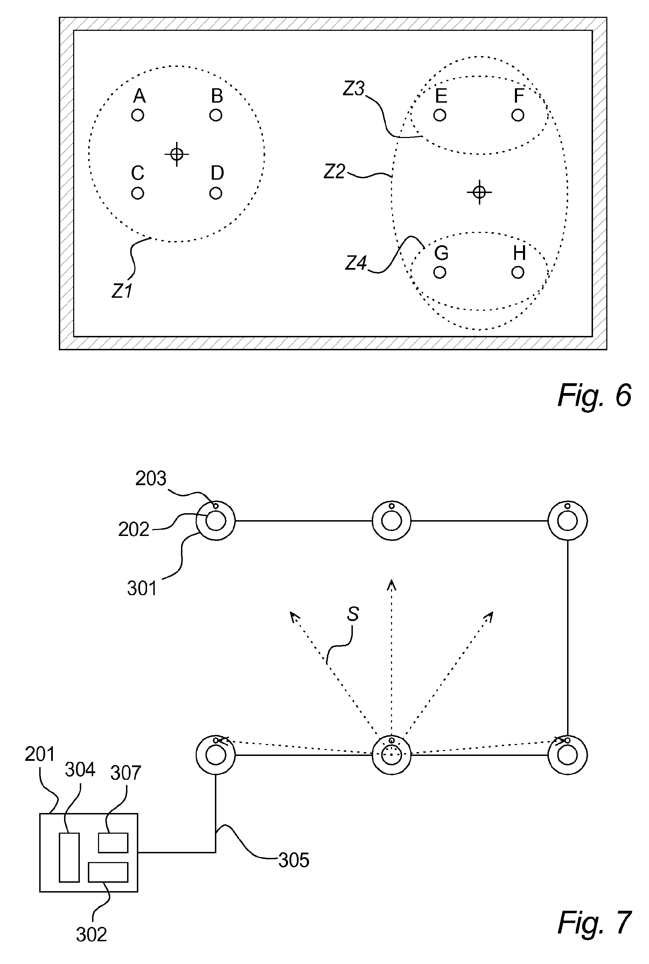

Figure 6 illustrates an environment, e.g. a room or hall, seen from above, with 8 loudspeakers installed, denoted A-H. The present invention may automatically assign the loudspeakers into zones, based on the determined spatial relations.

This assignment may be performed using different methods of cluster analysis, known in the art, such as the K-means algorithm, which would compute spatial centroids, based on the relative positions of the loudspeakers. The K-means may assign the 8 loudspeakers, in the example, into 2 zones, Z1 and Z2, based on the 2 centroids in the middle of A,B,C,D and in the middle of E,F,G,H, respectively (indicated in figure 6 by a crosshair symbol).

Alternatively, a hierarchical clustering may be advantageous, as it could successively split overall zones into smaller ones, such as Z2 being the hierarchical "parent" of zones Z3 and Z4.

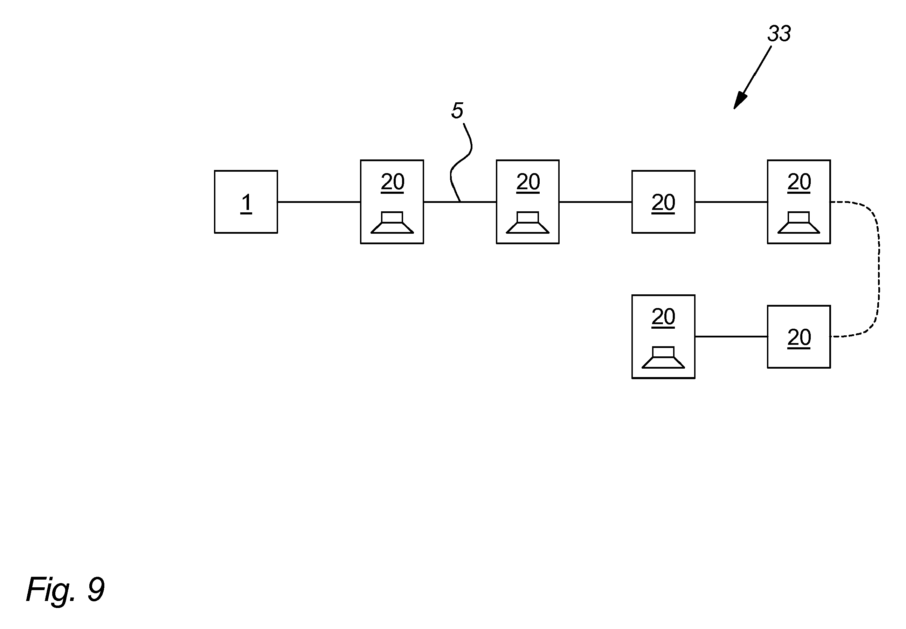

Figure 7 illustrates a loudspeaker system wherein embodiments of the present invention may be applied, for example for determining the spatial arrangement of the loudspeakers, or verifying an installation. A number of loudspeaker nodes 301, each comprising at least a loudspeaker 202 and a microphone 203, are connected, preferably by a bi-directional loudspeaker bus 305, e.g. an embodiment of a powered audio bus as described below with reference to figs. 9 - 17. The loudspeakers are controlled by a central controller 201, preferably a bus driver for the loudspeaker bus. The central controller 201 comprises a processor 302, a memory 307 and a user and/or communication interface 304.

The processor may be employed for controlling the loudspeaker nodes by transmitting audio signals and control signals to them, and for receiving and analyzing audio signals or preprocessed audio signals generated by the microphones 203. The processor may further be employed for example as a zoning unit for determining zoning suggestions based on the analyzed sound measurements, or as a verification unit for verifying various loudspeaker system properties based on the analyzed sound measurements, as described.

The memory may be employed for storing sound measurements, identifiers, and results of the various analysis tasks of the processor, for example a loudspeaker system layout, a zoning table mapping loudspeaker nodes to zones. The memory may further be used for storing auxiliary information received electronically or typed in by a user, the auxiliary information for example comprising expected layouts or number of loudspeaker for use in verification processes, or for example information about the environments, such as for example room dimensions, height from floor to ceiling, etc., for use in determining spatial arrangements.

The user and/or communication interface may be used to provide results and information from the processor, memory or loudspeaker nodes to an operator of the controller, or to remote interfaces, whether machines or persons, for example via a LAN, WiFi, or Internet-connection.

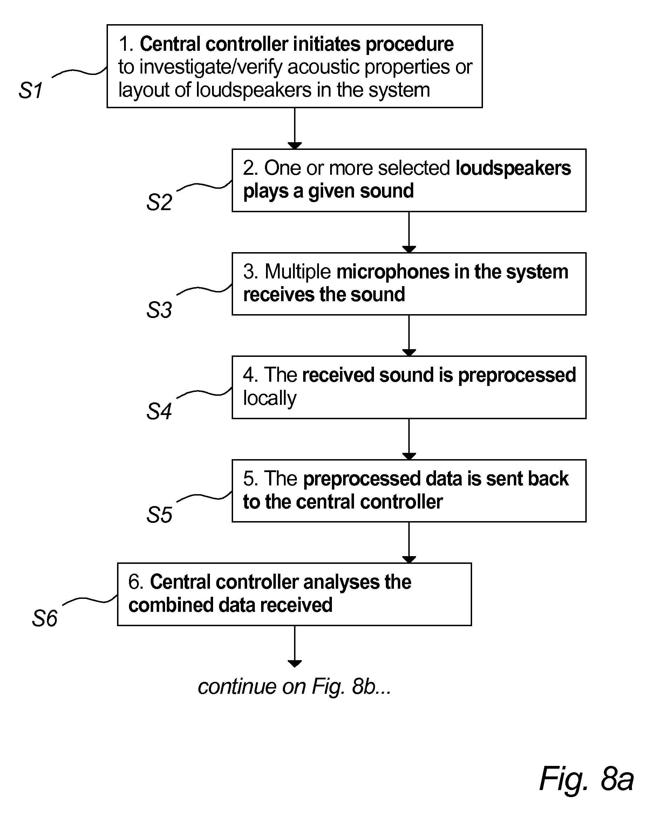

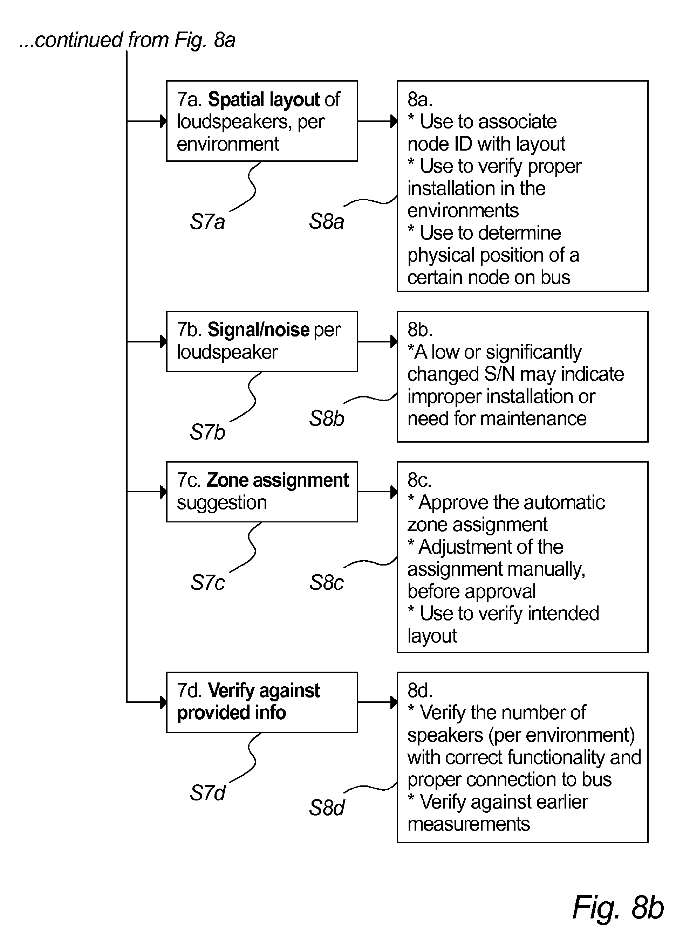

The flow-chart in fig. 8 (8a-8b) describes the workflow of embodiments with 4 applications (steps S8a-S8d). In step S1 a central controller initiates a procedure to investigate or verify acoustic properties or spatial arrangement of loudspeakers in the system. By step S2 one or more selected loudspeakers plays a given sound, which in step S3 is received by multiple microphones in the system. The received sound is preprocessed locally in step S4, and the preprocessed data is sent back to the central controller in step S5. The steps S2-S5 may be repeated a number of times, typically with different subsets of the loudspeakers. The preprocessing step S4 may consist of envelope detection or cross-correlation (both described above), or analysis of acoustic reflections in the sound, or computation of signal/noise ratio or of frequency response. In step S6, the central controller analyses the combined data received. Steps S2-S5 may be executed simultaneously, or S4 and S5 may be executed sequentially after S2 and S3.

The four example applications a, b, c and d in steps S7-S8 comprise the following:

In one application illustrated by steps S7a and S8a, a two- or three-dimensional spatial arrangement of the loudspeakers is determined based on the analysis in step S6. Preferably, a spatial arrangement is determined for each separate environment, e.g. room, which contains loudspeakers of the system. The determined spatial arrangement may for example be used to associate individual loudspeakers with spatial location; verify that the installation in the environments is proper e.g. as expected from a plan; and/or determine physical position of a certain loudspeaker in the system, e.g. a loudspeaker node on a loudspeaker bus.

Another application illustrated by steps S7b and S8b comprises different verification scenarios. First the signal/noise ratio S/N per loudspeaker is determined from the analysis of step S6. If the signal/noise ratio, measured acoustically with the neighboring microphones, is very low, this may indicate an improper installation or a malfunction. In case the S/N is "infinitely" low, i.e. the signal is not audible over the noise, the loudspeaker node in question may not be properly connected to the bus. Furthermore, the S/N may be compared to previous S/N measurements, and hence a significant change in relative S/N may indicate the need for inspection or maintenance.

Steps S7c and S8c illustrates an application of suggesting zone assignments based on the data analysis of step S6, for example by determining from the data how loudspeakers are grouped, or how they are distributed in the environments. The application may further comprise using the suggest zone assignment to approve an automatic zone assignment; adjust an automatic zone assignment manually before approval; or verify an intended spatial arrangement of the loudspeakers.

In an application illustrated by steps S7d and S8d, the data of the analysis in step S6 are used to verify the loudspeaker system against provided auxiliary information. It may for example be used to verify the number and/or type of loudspeakers, possibly per environment, which have been correctly installed, is connected to a loudspeaker bus and works properly, or verify against earlier measurements.

Embodiments of a loudspeaker system facilitating the invention of determining spatial relations and verifying installation is described below with reference to figures 9 - 17. The loudspeaker system described is able to include microphones in the nodes and transmit microphone measurements or analysis thereof back to the central controller, and the nodes are individually controllable and can thereby make sound on individual request if necessary.

Figure 9 illustrates an audio system 33 according to a loudspeaker system embodiment of the invention. The audio system 33 comprises a powered audio bus 5. A bus driver 1 provides control data, audio and preferably power to the powered audio bus 5. A number of nodes 20 are daisy-chained to the powered audio bus. Preferably at least a number of the nodes 20 comprises loudspeakers, for example a built-in active loudspeaker, an output stage with a loudspeaker output for connecting an external passive loudspeaker, or a line-out or equivalent for connecting an external active loudspeaker.

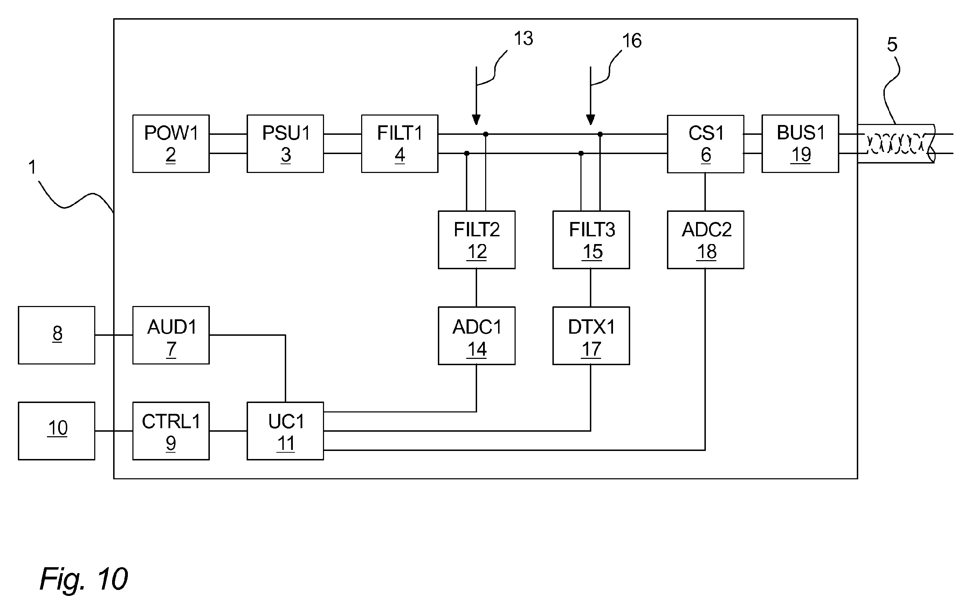

Figure 10 illustrates a bus driver 1 of the audio system 33 in more detail according to an embodiment of the invention. The bus driver 1 is preferably supplied with power from a driver power supply 2. This power supply may e.g. be connected to 110/230VAC mains, or comprise a DC source or any other electrical power source. Further, the bus driver 1 preferably comprises a driver power converter 3 which converts the incoming power to a DC voltage that supplies nodes 20 of the audio system 33.

Together the driver power supply 2 and the driver power converter 3 supply all electronics of the bus driver 1 and nodes 20 with suitable working voltages and may be referred to as bus power supply. The components of the bus power supply may be implemented in the bus driver 1 or may be external to the bus driver 1 and coupled directly to the powered audio bus 5.

The DC voltage is preferably below 50V and preferably between 40V and 50V. Preferably 48V is provided to the nodes 20 via the powered audio bus 5. The DC voltage should be balanced between low losses in the powered audio bus 5 (high DC voltage limits power loss) and secure or non-hazardous data transmission (low DC voltage facilitates avoiding conduits and compliance with safety requirements). Hence communication between the bus driver 1 and the nodes 20 therefore both comprise a supply voltage powering the nodes 20 and an audio signal for broadcasting via the nodes 20.

It should be mentioned that the capacity of the power supply 2 may vary from e.g. around 50W to over 1000W depending on the size and requirements to the audio system 33. Further, if considered necessary, an external (to the bus driver 1) power supply also referred to as injection power supply may be connected to the powered audio bus 5. The power is used at the nodes 20 for supplying local amplifiers, data processors, etc.

Power injectors for supplying additional power to the powered audio bus may preferably also be implemented as nodes and receive control data from the bus driver, for example in preferred embodiments to be shut off or disconnected during a node enumeration process to not disturb current measurements. The power injectors may for example use principles from the power over Ethernet (PoE) technology to inject power. Power injectors may provide power from mains, a battery or the like.

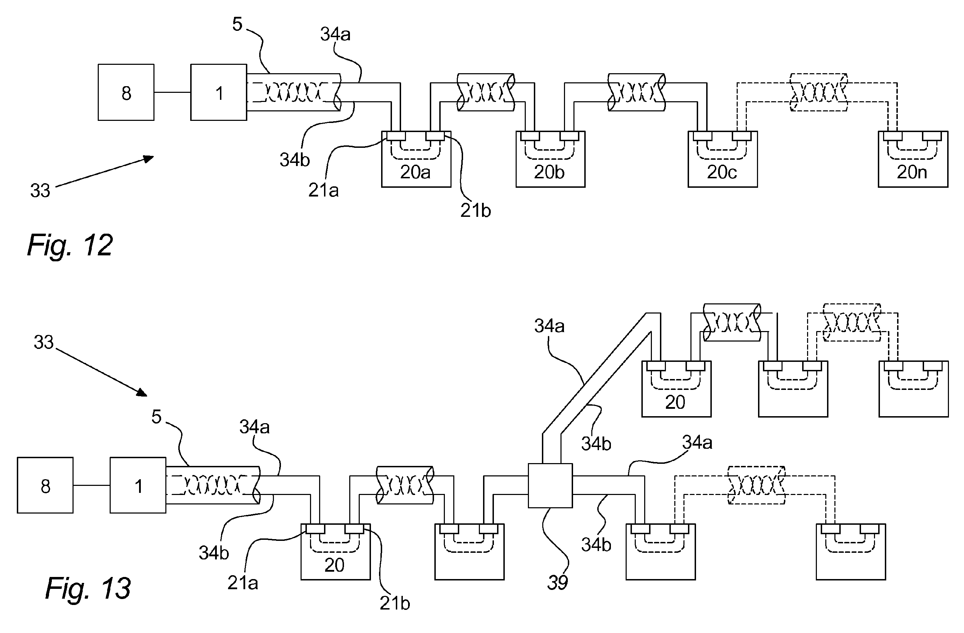

Preferably the bus driver 1 further comprises a first driver filter 4, which decouples the driver power supply 2 from the powered audio bus 5 (the preferably two conductors hereof denoted 34a, 34b of figures 12-14) with regards to alternating current. The first driver filter 4 may be implemented using power inductors, preferably with an inductance above 10uH for all operating currents.

Preferably the bus driver 1 further comprises a driver current sensor 6. This current sensor 6 is optional and if implemented, the current sensor 6 facilitates measurement of the current consumption on the powered audio bus 5 downstream from the bus driver 1. In addition, the driver current sensor 6 may act as a powered audio bus voltage monitor.

Preferably the bus driver 1 further comprises a driver audio interface 7, which acts as interface towards audio signal(s) between the bus driver 1 and an external audio source 8. Audio in this context may be analog (balanced or unbalanced electrical signal) or digital audio sent from the audio source 8 via WiFi, Bluetooth, Ethernet, USB, SPDIF, AES/EBU, ADAT, TOSLINK or through any other suitable digital protocol. Hence when referring to audio throughout this document a reference is made to a data signal which may comprise other information beside audio such as simple data, video, etc. to be exchanged between the bus driver 1 and the nodes 20.

Preferably the bus driver 1 further comprises a driver interface unit 9, which acts as interface towards control/information/status signal(s) between the bus driver 1 and external controller(s) 10. These signals may be sent through WiFi, Bluetooth, Ethernet, USB, RS232, RS485, or through any other suitable mechanism.

The bus driver 1 may include an internal audio source (not illustrated) or be connected to an external audio source 8 as described above. An external audio source 8 may be located as part of a LAN (LAN: Local Area Network) or the internet. It may be accessed remotely from the bus driver 1 e.g. via a wireless / wired LAN or the internet. The audio source 8 could be any audio player such as a portable device such as a tablet, smartphone, laptop etc. or it could be part of a larger setup for audio production and / or audio distribution such as a stationary media player, computer, data storage, radio, matrix unit, audio power amplifiers or the like. The audio source 8 could also be a "music player" inside the driver, like e.g. a radio receiver or a streaming media receiver, which receives digital audio from the internet.

The type of audio source 8 could be any source relevant for the application where the audio system 33 is in use and is therefore not important to the present invention. The present invention focus on the distribution of the audio signal and not on the source or type of the particular audio signal. Therefore, the driver audio interface 7 is not specified further in that different audio source 8 (if not part of the bus driver 1) could be connected to the bus driver 1 by various types of optical, wired or wireless audio and video connectors such as e.g. different types and sizes of jacks, plugs, connectors, screw / screw-less wire connections or the like, and the audio signals could be of various relevant analog or digital audio formats, encodings, compressions, container formats, etc.

The driver audio interface 7 and the driver interface unit 9 are preferably also used as interface to other audio systems, bus drivers 1, internet etc. In this way the audio broadcasted by the nodes 20 connected to the bus driver 1 can be coordinated with other bus drivers 1 of the same or other audio systems 33. It is thereby also possible to connect the audio system 33 to other systems such as home automation systems and provide information gathered from the nodes 20 or from the bus driver 1 to such system or retrieve information from such systems for use in the audio system 33.

The internet connection for the bus driver 1 also facilitates remote control and monitoring of the audio system 33 as such and of the individual elements hereof such as the nodes 20. This means that the health of a node 20 can be remotely monitored, faults can be located which facilitates faster maintenance or replacement, data from several audio systems 33 can be logged and used for statistics and future improvements, etc.

It should be mentioned that preferably, the audio source 8 is possible to reach from a not illustrated control interface. Such control interface may be used for selecting the particular audio from the audio source 8 to be broadcasted via the nodes 20, the quality, sound level, audio channel, etc. An example of a control interface could be an app installed on a mobile device such as a tablet or smartphone, or it could for example be implemented in the bus driver 1 or external audio source 8.

The fact that the audio system 33 facilitates remote or automatically enabled individual level control of the loudspeaker 32 of the nodes 20 has several advantages.

First this enables that a given sound profile in a single zone of nodes 20 can be changed dynamically without the need for mechanically adjusting e.g. a rotary switch on each individual node 20 or loudspeaker 32. This enables that a first node of a zone has a first sound level and a second node has another higher or lower sound level, hence, the sound level of the node at the bar or the restaurant is higher than the sound level of the node at the toilet, even though the nodes are of the same zone playing the same music. This will be an advantage in zones where playback level requirements change over a daily rhythm, like in bars and restaurants. A second feature with this ability is that mix-minus can be implemented. Mix-minus is a technique where the audio level in the proximity of a person speaking in a microphone, is reduced so that the person does not hear his/her own voice at an amplified level. This feature increases the "naturalness" when using microphones. When several microphones exist within a single zone (e.g. in a conference room), it is required that the individual loudspeaker 32 can reduce its sound level as a function of which microphone is activated.

In addition, status information of the node 20 may also be measured and transmitted to the bus driver 1. Status information could e.g. be temperature, power consumption, loudspeaker impedance, etc.

Preferably the bus driver 1 further comprises a driver processing unit 11 which may be considered the main data processor of the bus driver 1 and as such of the entire audio system. The driver processing unit 11 gathers data and control/information signals and makes decisions about signal routing, nodes 20 operation etc. Hence the purpose of coordinating and controlling signals and data processing of the bus driver 1 is controlled by the driver processing unit 11. This may include defining quality of the audio signal, framing the manipulation made by the data processors, determining when and which audio signal should be transmitted from the bus driver 1, processing data received by the bus driver 1 and taking appropriate actions, calibration and set-up of nodes 20, etc.

The bus driver preferably facilitates two communication channels between the bus driver 1 and the nodes 20, but may in various embodiments only facilitate one, or more than two. An advantage of facilitating two communication channels may be to ensure some degree of communication even when circumstances make one of the communication channels unusable. Therefore the two communication channels are preferably designed according to quite different technologies with different shortcomings and advantages. In an embodiment, a first communication channel may for example allow for robust communication with a simple encoding at relatively low frequencies, but inherently slow, whereas a second communication channel may for example allow for high-frequency, high-data-bandwidth advanced communication, but relatively sensitive to any irregularities.

For the above-mentioned first communication channel, the bus driver 1 may for example comprise a second driver filter 12 and a first driver analog-to-digital converter 14. The second driver filter 12 facilitates attenuation and filtering of signals and noise received via the bus 5 which does not belong to the first communication channel, and it preferably decouples the DC power of the bus from the processing of the first communication channel by means of for example capacitors.

In a preferred embodiment, the first communication channel signal passing through the second driver filter 12 from the nodes 20 is an FSK (FSK: Frequency-Shift Keying) signal with a relatively low carrier frequency, in particular preferably well below the frequency contents of the second communication channel which preferably works at frequencies far above the human audible frequency range. An example of a suitable FSK modulation scheme for this application may be a binary FSK modulation using the frequencies 8kHz and 12kHz, where the second driver filter 12 may be a band-pass filter allowing signal to pass in that frequency region. The typical attainable bit-rate using such a mechanism for communicating on a bus 5 is in the range of a few kbit/sec. The method for communication is mainly determined by the desired amount of the information to be sent and the bandwidth of the powered audio bus 5, hardware at the node 20 / bus driver 1 facilitating data transmission (hardware here is any kind of data processor) and would in most cases be slow compared to the audio signal transmitted from the bus driver 1 to the nodes 20.

The first driver analog-to-digital converter 14 facilitates translation of the analog modulated communication signal (carrying digital data) of the first communication channel from the nodes 20 of the powered audio bus 5 to a digital (quantized in both amplitude and time) representation. In some cases, it would be advantageous to establish two-way-communication through this first communication channel 13. In case of such bilateral communication between bus driver 1 and nodes 20, the first driver analog-to-digital converter 14 may also comprise a digital-to-analog converter that translate a digital signal from the driver processing unit 11 into a time/amplitude continuous representation and pass that signal through the second driver filter 12. In the latter case a function in the digital-to-analog converter allows the digital-to-analog converter to adopt a hi-z mode when the first driver analog-to-digital converter 14 is receiving information from one or more nodes 20 on the powered audio bus 5. Preferably the driver processing unit 11 is arranged to process the, for example, FSK signal received through the first communication channel, and/or to generate, e.g., FSK signals for transmitting to the nodes 20 via the first communication channel.

For the above-mentioned second communication channel, the bus driver 1 may for example comprise a third driver filter 15 and a driver digital transmitter 17. The primary function of the third driver filter 15 is to decouple the DC power of the bus from the processing units of the second communication channel by means of for example capacitors, but it may also facilitate attenuation and filtering of signals and noise on the bus 5 which does not belong to the second communication channel.

At least the DC component from the powered audio bus 5 should be attenuated and preferably removed entirely. In a preferred embodiment, the second communication channel signal passing through third driver filter 15 may be a binary data signal holding audio related data and (optional) control data from the driver processing unit 11 to a node 20. One such binary data stream may comply with the AES3 (also known as AES/EBU) protocol having a typical rate at 44.1 kHz or 48kHz, holding two 24 bit channels. Other rates and/or protocols may also be used, however, the AES3 protocol has proven its worth over the last couple of decades as being a very robust audio transport protocol. As a part of this standardized protocol are "user data" and "channel status" bits. For this application, these may be used as means for controlling nodes 20.

Preferably as part of the second communication channel, the bus driver 1 further comprises a driver digital transmitter 17 facilitating conversion of a digital data stream from the driver processing unit 11 to a differential electrical signal, which may be passed through the third driver filter 15 to the powered audio bus 5. In a preferred implementation, the electrical signal complies with the RS-422 or the RS-485, which are robust standardized protocols for transporting digital data over long distances and in noisy environments. These standards have been the preferred choice in many industrial automation systems for several decades. Optionally, the driver digital transmitter 17 also comprises a digital receiver (not illustrated), such that bi-directional data streaming (half duplex) can be obtained between the driver 1 and the nodes 20. When receiving data, the driver digital transmitter 17 adopts a hi-z state which is typically a built in feature in most RS-485 transceiver integrated circuits.

Such digital receiver may be connected in parallel with the driver transmitter 17 and is preferably AC coupled to the powered audio bus 5.

When the audio signal from the audio source 8 has been processed by the bus driver 1 to comply with requirements e.g. to the quality of the signal, this signal is transmitted to the network of nodes 20 via the powered audio bus 5. The choice of digital audio transport is advantageous in that it is free for disturbances like cross-talk issues and hum (50/60Hz) artifacts and facilitates a plurality of parallel bi-directional information on the transmission conductors 34a, 34b of the powered audio bus 5 between bus driver 1 and nodes 20 such as a plurality of simultaneous audio channels along with communication of control data.

The audio / data transmission (simply referred to as audio transmission or data transmission) is preferably of a type facilitating data transmission effectively over long distances (e.g. up to a few hundred meters) and in electrically noisy environments as well as facilitating connection of multiple nodes 20 to the powered audio bus 5. Data transmission can be done in a very robust way by transmitting signals differential i.e. with information hidden in the difference between two conductors.

In a preferred embodiment, the audio transmission is complying with the TIA-485 standard (formerly known as RS-485 standard), an electrical digital layer which is very robust and reliable, but other standards could also be used. Hence the digitally encoded audio information is preferably superimposed on a DC supply voltage and communicated over the powered audio bus 5. The nodes 20 then comprise an audio decoder / node processing unit 23 that reconstructs the audio signal into a format suitable for input to the node power amplifier 31 (also referred to simply as node amplifier) or directly for input to the loudspeaker 32 which then produces the final audible speech, music, tones, etc.

In an embodiment, the bus driver 1 further comprises a second driver analog-to-digital converter 18 that allows the driver processing unit 11 to read current and voltage on the powered audio bus 5. This information can be used to detect powered audio bus fail and to help in automatically establishing a map over the bus network e.g. information of nodes 20 located on the powered audio bus 5.

The bus driver 1 may be connected at least to a main power supply or battery, analog audio (balanced or unbalanced), digital audio (electrical or optical) SPDIF, TOSlink, AES/EBU, ADAT, etc., network such as Ethernet, internet, RS232, CAN, etc., WiFi, Bluetooth, etc. Further, it should be mentioned that the bus driver 1 may have a user interface with buttons, (touch) display, LEDs, etc.

Preferably the bus driver 1 further comprises a driver-bus interface 19 facilitating the connection between the bus driver 1 and the powered audio bus 5 with its nodes 20. This connection may comprise EMI (EMI: Electro-Magnetic Interference) components that reduce electromagnetic interference from/to the bus driver 1. Such components may be capacitors, resistors, inductors, transient absorbing devices, and any other parts that improve the compatibility to/from the surroundings. The driver-bus interface 19 may also comprise a physical connector, which preferably is a so-called Phoenix connector, i.e. the typical loudspeaker connector used for professional fixed installations.

As mentioned, the bus driver 1 includes one or more data processors including controller units, analog-to-digital and digital-to-analog converters, filters, transmitters and receivers, interfaces etc. Hence when the audio / data signal (simply referred to as audio signal or data signal) is an analog signal, it is converted to a digital representation of the analog signal in a desired quality. Likewise if the audio signal is a digital signal, it is converted to an analog representation hereof in a desired quality. To obtain a desired quality of the audio signal, the data processors may perform mathematical manipulation of the audio signal such as filtering, compressing / decompressing, etc. the audio signal.

According to an embodiment of the invention, the bus driver 1 facilitates both transmitting and receiving of audio / digital signals to and from the nodes 20. Hence in situations where the nodes 20 are intelligent in the sense of being able to communicate to the bus driver 1 either based on own motion or as a reply to a query from the bus driver 1, the data processors may receive and process such communication. This processing may include converting such bidirectional communication between bus driver 1 and node 20 from a digital signal to an analog signal or vice versa. Further, extraction of information sent from the nodes 20 may also be necessary and be performed by one of the above mentioned data processors.

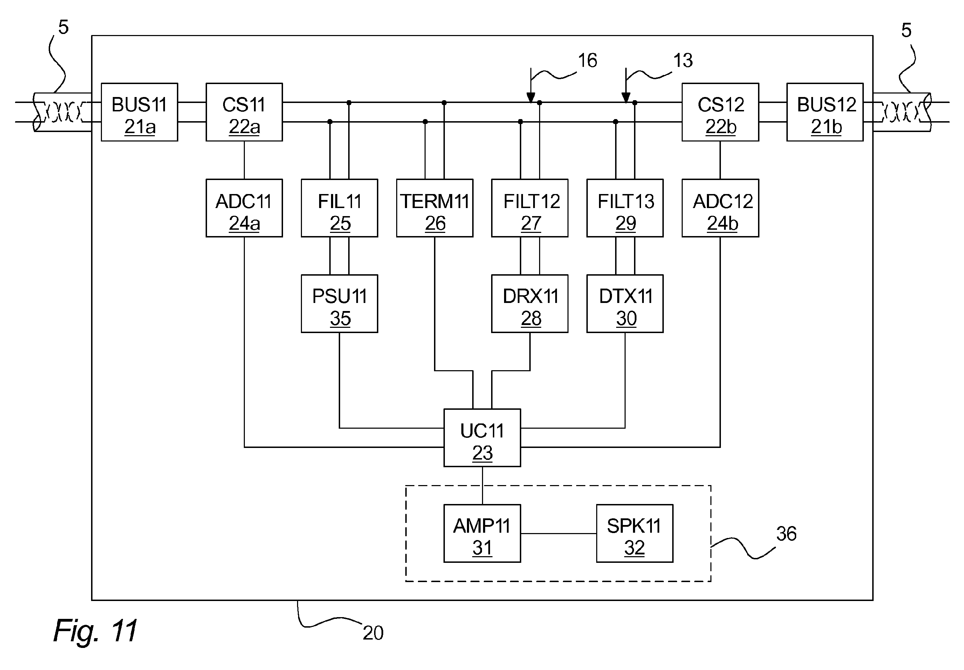

Figure 11 illustrates a preferred embodiment of the node 20 according to the invention. Preferably the node 20 comprises two node-bus interfaces 21 (21a first node-bus interface, 21b second node-bus interface) facilitating the connection of the node 20 to the powered audio bus 5. This connection may comprise EMI components that reduces electromagnetic interference from/to the bus driver 1. Such components may be capacitors, resistors, inductors, transient absorbing devices, and any other parts that improve the compatibility to/from the surroundings. The node-bus interfaces 21 may also comprise a physical connector, preferably a so-called Phoenix connector.

To ease the installation process and to minimize the risk of errors made during installation, the person mounting the bus driver 1 and nodes 20 to the powered audio bus 5 may freely connect either first node-bus interface 21a or second node-bus interface 21b to the upstream end of the powered audio bus 5 cable, meaning that the signal flow in the node 20 (from first to second node-bus interface) may be in either leftwards or rightwards direction. Further, the user is allowed to connect the preferably two conductors of the powered audio bus 5 cable to any of the terminals found in the node-bus interface 21 a, 21b, meaning that the polarity of the part of the powered audio bus inside the node 20 (conductors between first and second node current sensor 22a, 22b) may be either positive or negative. Again, this is advantageous in that it helps to ease the installation process and to minimize errors made in that process.

Preferably the node 20 further comprises a first node current sensor 22a and a second current sensor 22b, which are arranged so that the nodes 20 own current consumption can be distinguished from any downstream current consumption - regardless of both voltage polarity and signal (preferably a DC current) direction.

It should be mentioned that the first and second current sensors 22a, 22b may further comprise means for sensing the bus voltage level. Other suitable sensor structures may be used as long as the node processing unit 23 is able to obtain at least the downstream current consumption. The current sensors 22 may be implemented using Hall sensors, inductive based sensors, current to voltage conversion using a resistor having low resistance, or any other suitable mechanism.

Ideally, the current sensors 22 does not cause any signal changes from node input to output, such that signals at the node-bus interfaces 21 are identical, meaning that they are fully transparent in both directions.

Several circuits may establish a current estimate, which is able to estimate current regardless of its polarity and current flow direction, preferably the current sensors 22 are implemented as resistors referring to zero (ground potential). Having two (identical) current sense circuits and the knowledge of bus polarity allow the slave to choose to take the current information from the current sense circuit that is connected to the ground potential. Current is preferably sensed across two resistors. This makes the node able to distinguish between its own current consumption and the downstream consumption.

Accordingly, the current sensors 22 together with e.g. the node processing unit 23 and other not mentioned components may be referred to as a bus power monitoring unit.

Preferably the node 20 further comprises a first and second node analog-to-digital converter 24a, 24b that allow the node processing unit 23 to read current and voltage on the bus, sensed as described above.

Preferably the node 20 further comprises a first node filter 25 facilitating blocking of AC currents. The purpose of the first node filter 25 is to extract DC current for powering the node 20. This first node filter 25 may be implemented using inductors having a relatively large inductance, preferably above 100uH. This is because when looking at larger audio systems comprising several nodes 20, several of these first node filters 25 will be mounted in a parallel on the powered audio bus 5.

Preferably the node 20 further comprises a node power supply 35, also simply referred to as power converter.

The DC supply voltage from the bus driver 1 is converted at the node 20 to a voltage level of e.g. between 1V and 12V for supplying one or more data processors and other power consuming components of the node 20.

To make sure that high frequency components of the digital audio signal of the powered audio bus 5 are not "short circuited", e.g. an inductor may be implemented between the powered audio bus 5 and the components of the node 20.

Preferably the node 20 further comprises a transmission line termination unit 26, that ideally inserts an impedance if the node is at one end of the powered audio bus 5 (preferably the farthest or the last node 20 in a series of nodes 20 on the powered audio bus 5) to eliminate transmission line reflections. The node may determine itself whether it is at the end of the powered audio bus, or, preferably, the bus driver instructs the appropriate node to insert its transmission line impedance. The transmission line termination unit 26 is controlled from the node processing unit 23, which can insert a transmission line termination impedance using a relay, transistor, MOSFET or by any other suitable means. In a preferred embodiment, the transmission line termination impedance is a resistor in series with a capacitor.

It should be mentioned that the powered audio bus 5 should be terminated in both ends. At the bus driver 1 end of the powered audio bus 5, the output impedance is known e.g. from the driver digital transmitter 17.

Preferably the node 20 further comprises a second node filter 27 that attenuates signals components not of interest for passing the digital audio and control streaming data. At least the DC component is attenuated or preferably entirely removed. Such AC coupling may be implemented using capacitors and resistors.

Preferably the node 20 further comprises a node receiver, preferably a node digital receiver 28 that receives the digital audio signal (preferably via the second communication channel 16) outputted from the controller digital transmitter 17 of the bus driver 1, and passes this signal on to the node processing unit 23. The node digital receiver 28 may also (optionally) include a digital transmitter and may be implemented using a RS-485 receiver/transceiver.

Preferably the node 20 further comprises a third node filter 29 for the first communication channel that attenuates signals components not of interest for passing the control/information/status data. In a preferred embodiment, the data is encoded using frequency shift keying FSK at a carrier frequency that do not disturb the digital streaming data sent through the second communication channel 16 - as described above. The third node filter 29 may be implemented inductors, capacitors and resistors. Preferably the node 20 further comprises a node transmitter 30 facilitating outputting a modulated version of the status data sent from the node processing unit 23 to the bus driver 1. In a preferred embodiment, this may be done by using frequency shift keying FSK, in that FSK may be robust even though the farthest node 20 is not terminated yet. In this way the node 20 can be identified e.g. by means of an identifier send from the node 20 to the bus driver 1. The node transmitter 30 may be implemented by using simple buffers from the 74HC logic family (outputting squarewave signals) or by using a digital-to-analog converter. Output of the node transmitter 30 is ideally tri-stated when not sending data. Optionally the node transmitter 30 may be implemented in a bidirectional fashion, similar to the first controller analog-to-digital converter 14 of the bus driver 1.

Preferably the node 20 further comprises a node processing unit 23 acting as the main data processor of a given node 20. It receives (from the node digital receiver 28 or from any other audio sources, not illustrated), process, and outputs audio signal to a node amplifier 31 or any other audio output channels (not illustrated). Further, the node processing unit 23 receives control signals at least from either the node digital receiver 28 and/or from the node transmitter 30. These control signals are interpreted and suitable actions are carried out on basis of the control requests. The node processing unit 23 is also an important part of the "end-of-cable" identification process and the node enumeration process of the illustrated embodiment.

Preferably the node 20 further comprises a node power amplifier 31 that drives one or more loudspeakers 32. The node power amplifier 31 preferably receives audio from the node processing unit 23 (or from other sources) and may receive audio signals using an either analog and/or digital interface (not illustrated).

The node power amplifier 31 may both be of an analog (time-continuous) or a digital (time discrete) type having either an analog input signal or a digital input signal.

According to a preferred embodiment of the invention, the preferred node power amplifier 31 is a class-D amplifier. Due to the fact that the audio signal from the driver processing unit 11 preferably is a digital audio signal, the node power amplifier 31 is preferably a class D amplifier having a digital input, thus requiring no digital-to-analog converter.

With the distributed amplification at each individual node 20, where each loudspeaker has its own node power amplifier 31, the sound quality can be improved compared to the traditional 70VRMS/100VRMS systems. In the traditional systems, the audio power signal has to pass through an inherent transformer found as a part of the loudspeaker node 20. Such transformer causes core saturation effects for low frequency signals, meaning that a filter is always invoked that attenuates these signal components and thus attenuates the low end of the frequency spectrum. Getting rid of the transformer thus enhances the sound quality with a better and more "tight" bass reproduction.

Preferably the node 20 further comprises a loudspeaker 32 that comprises one or more passive loudspeakers. In a preferred embodiment of the invention, the loudspeaker(s) is (are) of the electrodynamic type, having an impedance in the range of 2-32 Ohm.

The node power amplifier 31 and loudspeaker 32 may form part of a utility unit 36 of the node 20. The utility unit 36 may also comprise a data processor, the purpose of which may be to convert and transmit data received from a transducer such as the loudspeaker 32 (making the speaker 32 act as microphone) or other not illustrated transducers such as microphones, light sensors, smoke sensors, temperature sensors, proximity sensors or the like, or emitters or actuators, e.g. LEDs, displays, etc., or interface devices, e.g. buttons, Bluetooth transceiver, IR transceiver, connectors for wired external devices, etc. Example of use of such transducers could be a microphone, preferably connected to node processing unit 23, e.g. via an A/D-converter, which may be employed for any of the following or other uses: estimate ambient noise level or speech (e.g. to determine human presence), auto calibration, test of loudspeaker, determine location of other loudspeakers, sound level triggered burglar alarm, etc.

Such transducers could be standalone or integrated into the node 20 / bus driver 1, separate monitoring nodes connected to the powered audio bus 5, connected separately to the bus driver 1, etc. Such recorded information is transmitted (if necessary, after conversion from digital to analog or vice versa) by a suitable data processor to the bus driver 1 via the powered audio bus 5. Alternatively or in addition hereto, such information may be stored in a local memory (not illustrated).

As mentioned, the nodes 20 are preferably supplied with a DC voltage from the bus driver 1 via the powered audio bus 5 which preferably comprises at least two separate conductors 34a, 34b.

The size in terms of power consumption of a node 20 is mainly determined by the size of the loudspeaker 32 and examples of power consumption of the nodes 20 could be between 2W and 400W or higher, if needed, depending on purpose of use of the audio system 33, when operating at maximum power capability.

The fact that the nodes 20 comprise built-in data processing makes the nodes 20 intelligent thereby facilitating the creation of physical smaller nodes 20 with individual (possible remote) level control, audio source selection, etc.

As mentioned, these data processors facilitates, according to a preferred embodiment of the invention, digital signal processing, class-D modulation and facilitates receiving the digital signal transmitted via the standard or proprietary protocol as described above. In addition to the above described operations, these data processors may also facilitate operations from the following non-limiting list of operations which includes: equalizing, artificial reverberation, linear filtering, compensating the loudspeaker, limiting, compensating dynamic drop of DC voltage on the powered audio bus, registering and translation of sensor signals, frequency shift keying modulation, Class-D modulation to drive the loudspeaker, bass enhancement, speak and/or music discriminator which control equalizing speak and thereby making the speak easier to understand and/or making music sound better, etc.

It should be mentioned that some of these operations may also be facilitated by the data processors of the bus driver 1.

It should be mentioned that according to an embodiment of the invention, the bus driver 1 may at least partly be implemented as part of a node 20. Hence in this way, one single node 20 may comprise the bus driver 1 and thereby no standalone bus driver 1 may be necessary.

The illustrated bus driver 1 and nodes 20 are built from different components and it should be mentioned that the components and bus driver 1 and node 20 as such mentioned in relation to figures 9 - 11 may be combined in any suitable way to facilitate the desired audio system 33. Further, not mentioned components may also be needed such as a driver memory or node memory for storage of information retrieved during operation of the audio system 33 or preloaded with information relevant to operation of the audio system 33. Such memories could be of a minimum capacity such as a simple ROM only comprising an identifier such as a serial number of the node. However in most situations, the memories may be of a size capable of storing more data such as megabyte or gigabyte and of a type facilitating both reading from and writing to.

Further it should be mentioned that the fact that several data processors are mentioned should not be understood literally in that these may alternatively be implemented as one or more multifunctional data processors / units.

The audio system 33 of the present invention facilitates an intelligent audio signal distribution from bus driver 1 to individual nodes 20 and from nodes 20 to the bus driver 1 as will be described below.

Figure 12 illustrates an audio system 33 according to an embodiment of the invention comprising an audio source 8 connected to or part of a gateway also referred to as bus driver 1, transport media referred to as powered audio bus 5 or transmission line and a plurality of nodes 20. The powered audio bus 5 preferably comprises a first and a second conductor 34a, 34b.

To distribute power from an energy source internal or external to the bus driver 1 (audio power amplifier or power supply) to a passive or active node 20, the preferred choice for implementing the powered audio bus 5 is copper cables, since copper offers the best conductance. Aluminum cables could also be attractive, even though its resistivity is higher, as the total cost of cabling currently would be less than cobber cables and thereby it currently provides a better conductivity to weight ratio than copper. However, aluminum has a drawback when it comes to standard terminals, like common screw terminals, because metal oxidation will begin to act as an electrical insulator in a thin aluminum oxide layer. Further, the screw terminal requires a larger size to fit the larger wire dimension required to offer similar resistance as copper.

In relation to the distribution of an audio signal in either analog or digital form at least three options exist namely wireless using radio wave technology like WiFi, Bluetooth, ANR, ZigBee etc., optically using glass or plastic light-guides or electrically using conductive wires.

The wireless technology is at present not considered an option by professional audio integrators and consultants in that it is not considered robust enough. However for audio systems 33 with low requirements to robustness, wireless technology is an option as it most likely will be in the future for audio systems 33 having higher requirements to robustness as the wireless technology develops further. Another argument for not selecting wireless technology as the preferred technology is that wireless systems would require receiver/transmitter at the nodes which then would increase power consumption and thereby price of the audio system 33. Again, on the other hand, the benefits of the wireless system may compensate for these drawbacks in certain audio systems 33.

The optical data transfer technology has advantageous properties. First of all, the data bandwidth capabilities of an optical link are excellent. Optical fibers offer an extremely high data-rate for a given size of fiber and the signal quality loss, as a function of cable length, is low compared to electrical conductors. The downside however of optical fibers is the termination of the cable. When it has to be connected to a given device, the cable has to be cut and connected to the device through an optical receiver that translates light to an electrical signal. The cutting and mounting process is complicated, compared to a simple RJ45 plug or screw terminal connector.

Electrical conductors are preferred for use as transmission conductors 34a, 34b for carrying the audio signal from the bus driver 1 to the nodes 20 and vice versa and both in relation to analog and digital audio signal transport, a distinction between single-ended or balanced signaling can be made.

In a single-ended approach, the electrical information is placed relative to a common ground potential. This approach is primarily used for short distances and is simple and requires only a single transmitter and a single receiver for a single channel audio stream (analog or digital). However, the topology has one main drawback which is a lack of common-mode rejection.

To overcome the flaws of the single-ended communication topology, balanced signaling is preferred. This technique uses two conductors per information stream. The basic idea is to send out the information as a differential signal that holds the information as a difference between the electrical voltages on two conductors. Typically, this requires two (identical) individual transmitters that output the utility signal with opposite phase. In the receiver end, the difference is found using a differential amplifier that have a high Common Mode Rejection Ratio, meaning that any signal component common for the two conductors are canceled out. This means (in contrast to the single-ended topology) that even though common voltage potentials on the transmitter device and sender devices bounce up and down, this is not causing any false differential signal seen by the receiver.

Beside the advantage in relation to rejection of common-mode when using balanced signaling, the conductor pair, especially when the two conductors are twisted, also has much better properties regarding potential interference from and to other electrical conductors. Such interference could e.g. origin from electromagnetic disturbances from external sources (other cables in cable trays etc.).

Therefore the powered audio bus 5 according to a preferred embodiment of the invention is one type of standard commercial audio cable with insulated twisted pair cobber conductors such as the "Belden 5300U" type of security and commercial audio cable. With this said other types of cables could also be used such as shield or unshielded multi-conductor Cat5 cables or other cables, shielded or unshielded twisted pair type.

Key feature in deciding type of cable is that the cable is capable of transmitting digital signals at a high bitrate and that it complies with EMC requirements. In addition, it is preferred if existing cable e.g. used in existing 70V/100V analog audio systems could be used. Surprisingly the "Belden 5300U" (and similar) type cable facilitates transmission of digital signal at high bitrate and because the conductors are twisted, the cable are complying with EMC requirements and are commonly used in existing 70V/100V systems.

In principle, using a two conductor shielded cable gives three conductors which may be needed in some embodiments.

It should be mentioned that according to a preferred embodiment of the invention, the powered audio bus 5 is connecting a plurality of nodes 20 to the bus driver 1, preferably in a daisy chain network. Though it could be indicated from the figures of the daisy chain structure that the nodes 20 are series connected, the nodes 20 are substantially parallel connected from an electric point of view.

As mentioned the nodes 20 of the audio system 33 are preferably connected in a daisy chain network by a two conductor type transmission media also referred to as powered audio bus 5. It is preferred that the powered audio bus comprise two conductors 34a, 34b mounted directly in loop terminals also referred to as node-bus interface 21 of the nodes 20 which is illustrated on figure 12. As illustrated on figure 12, one end of each of the first and second connectors 34a, 34b is connected to a driver-bus interface 19 of the bus driver 1 and the opposite end of the first and second connectors 34a, 34b is connected to the node-bus interface 21 of the node 20a. The node-bus interface 21 of the node 20b is chained via the first and second conductors 34a, 34b to the node-bus interface 21 of the node 20a and so on.

As mentioned above, the nodes 20 are developed in such way that installation i.e. mounting of the transmission conductors 34a, 34b cannot lead to failure nor by confusing the mounting of the conductors 34a, 34b, neither to a particular terminal nor by confusing which of the node-bus interfaces 21a, 21b these conductors 34a, 34b should be mounted at. Thereby it is ensured that the audio is always in phase in that polarity of the conductors can be ignored and mounting of nodes 20 in the audio system 33 therefore becomes very easy and can be done without special knowledge to audio systems in general.

Preferably the conductors 34a, 34b of the powered audio bus 5 are connected directly to the nodes 20. Thereby additional conductors from the node 20 to the powered audio bus 5 e.g. a junction box connecting the additional conductors to the powered audio bus 5 is avoided which is an advantage in that such additional conductors could make communication of information from node 20 to bus driver 1 difficult. An example of such communication could be automatic individual node identification (e.g. node identification is sent to the bus driver 1 e.g. upon a request from the bus driver 1) or location of a node 20 in the network.

An advantage of daisy chained nodes 20 connected as described in this document is, according to the invention, that multiple audio channels can exist within a single transmission line (either as multiple conductors or as multiple digital audio channels within a single conductor pair), thereby making the audio system 33 and the installation as such more flexible. Since a single cable (powered audio bus 5) can carry the audio signal for more than one single subset of nodes 20 or zone of nodes 20, the cabling layout can be simplified and thus labor cost can be reduced. In fact, existing audio systems having a transmission line comprising at least one conductor pair can be retrofitted or updated to an audio system of the present invention.

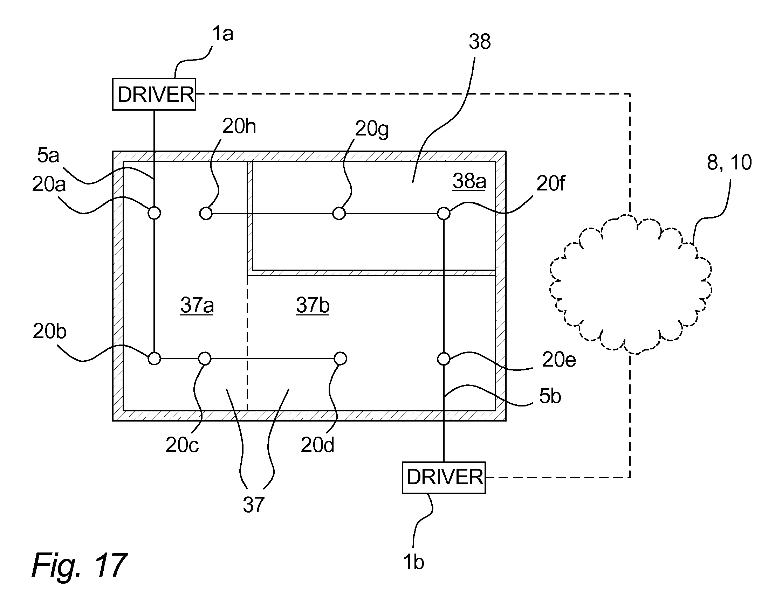

One single daisy chain of nodes 20 would potentially supply several different loudspeaker zones with individual audio channels as illustrated on figure 17 which illustrates a planar view of an audio system 33 according to the invention.

The audio system 33 of the present invention is very flexible in terms of number of audio channels, number of nodes 20 in a zone and in the daisy chain network and size or length of the powered audio bus 5 from the bus driver 1 to the last / farthest node 20 in the network.

The size of such daisy chain network could be determined by the number of audio channels and the quality of audio on these channels. According to an embodiment of the invention, a daisy chain network with two 48kHz audio channels would work fine even at a length of 100 meter of the powered audio bus 5 with sixteen 16 nodes 20 connected hereto.

With regard to the number of nodes 20 of the daisy chain, the limiting factor here is the degradation of transmission line quality and introduction of reflections each time a node 20 is added which introduces the risk of bit-errors.

Each parameter (nodes, quality, length, channels) are mutually influencing each other hence if e.g. only one channel is needed, the length / size of the daisy chain network can be increased. Another example could be if quality is required at 48kHz / 24 bit, then bandwidth may only allow two channels whereas the same bandwidth (48000*24*2 = 2.304 Mbit/sec) could be used to stream four 36kHz/16bit channels.

In general, it should be mentioned that it is preferred that the control of the nodes 20 i.e. distribution and broadcasting / producing of audio has higher priority than monitoring i.e. nodes 20 return information of the node 20 and its surroundings to the bus driver 1. The latter upstream status information may be sent at a few kbit/s, which enables that simple status information of a few bytes can be received from multiple nodes within a second by the bus driver 1.

In addition to the downstream audio stream and the upstream status, the downstream control signals i.e. queries, requests, status or user bits, etc. from the bus driver 1 to nodes 20 is also transmitted on the powered audio bus 5 e.g. at a speed of for example 96 kbit per second.

The audio system 33 preferably facilitates automated initialization i.e. upon request from the bus driver 1 each node 20 replies e.g. with type, serial number, etc.

As mentioned, the bi-directional data streaming enables end-node 20 monitoring. This enables a remote service functionality, where the entire audio system 33 including the nodes 20 and their loudspeakers 32 can be checked and precise error information is at hand before a service technician is at the location. This feature is also advantageous in the installation phase of the audio system 33, especially during installation of the daisy chain to verify the installation without the need for manually checking each individual node 20. When the bus driver 1 is connected to the internet, the remote services can be used from anywhere with connection to the internet.

The network layout illustrated on figures 12-14 is preferable a daisy chain topology, which resembles a coupling where the network bus driver 1 and network nodes 20 all sit electrically coupled in parallel or substantially in parallel. The node-bus interfaces 21a, 21b of the nodes 20 are virtually a short circuit, only having resistive loss from connectors and current sensors 22. Network examples can thus be illustrated as shown in figures 12-14 (connectors and current sensors not illustrated).

To minimize reflections in the cable constituting the powered audio bus 5, it is important to ensure that source impedance (bus driver output impedance), cable impedance and termination impedance (termination impedance is attached between bus conductors 34a, 34b in the last / farthest node 20 in a given branch or daisy chain) are identical or substantially identical. In a preferred embodiment of the invention, these three impedances (seen from a differential perspective in the range from 100kHz to 10MHz) are all in the range of 40 to 120 Ohm.

The network topology, however, is not bound to the pure daisy chain. Using Y-splitters 39 as illustrated in figure 13, the powered audio bus 5 may be divided into two (or even more) branches. To keep the impedance matching intact, it is important to insert a termination impedance in the end of both branches. It is furthermore required to add impedance matching means in the Y-splitters 39.

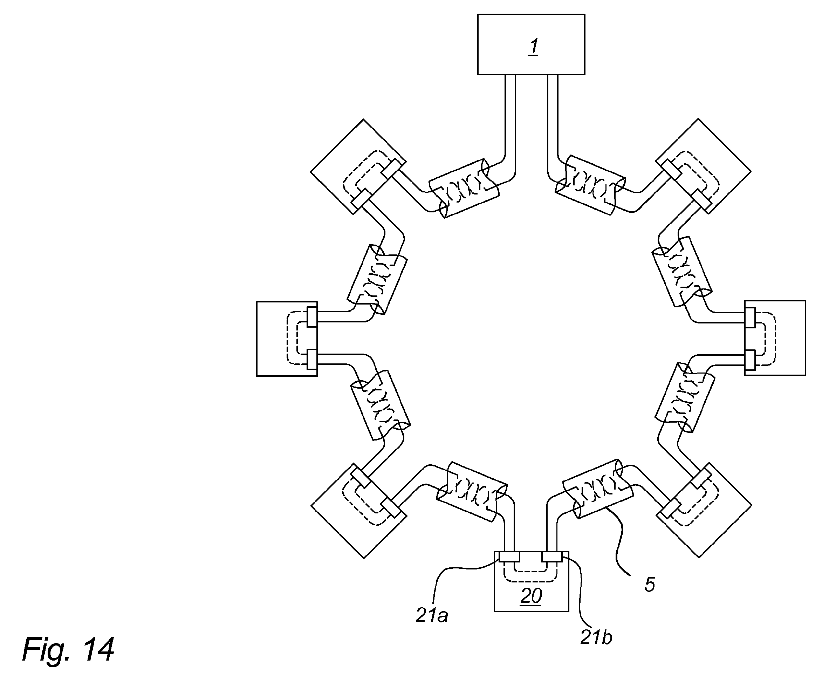

Figure 14 illustrates an example of a ring topology powered audio bus according to an embodiment of the invention. A powered audio bus 5 with several daisy-chained nodes 20 as described above are connected at each end to two individual audio bus ports of a bus driver 1. The bus driver is configured to handle the two ports as one powered audio bus of a ring topology, or detects this situation itself, e.g. by being able to receive its own control data of one port at the other port. Preferably, the bus driver makes one of the ports inactive, and may in various embodiments apply a transmission line impedance at the inactive port, or rely on the node nearest to the inactive port to be detected as farthest node and be instructed to apply its transmission line impedance as described above. An advantage of ring-topology embodiments is that in the case of cable break, disconnection of a node or other events that amputates a part of the powered audio bus from the bus driver, this situation may be detected by manual alarm input, by detecting impedance mismatch, low-quality communication, or by other automatic means, and upon concluding that a part of the bus is unreachable, the bus driver may activate the second port, perform node enumeration procedures on both ports, and thus proceed operation with two individual, powered audio buses. In other words, the ring topology enables a redundancy which is highly advantageous for critical audio systems, e.g. emergency or evacuation systems. The ring topology may also be implemented by various other embodiments, for example by providing an individual bus driver at each end of a powered audio bus, and either manually or automatically coordinate between the two bus drivers which one is active during normal operation, thereby still allowing the other bus driver to take over part of the powered audio bus in case of disruption. Thereby the bus driver function is also made redundant, and may advantageously be located in different physical locations to preserve one driver even in case of local fire, power loss, etc. A variation of the ring-topology embodiment comprises two or more bus drivers being connected to the powered audio bus at different locations, e.g. four bus drivers being distributed along the powered audio bus, and mutually coordinating or being coordinated which one operates as active bus driver during normal operation. In case of bus failure, a re-coordination takes place to determine the most appropriate bus drivers to take over operation of any amputated parts of the bus, and each active bus driver performs a re-enumeration of connected nodes.

Various other topology embodiments, including for example combinations of the topologies described and shown with reference to figures 12 - 14 are possible and suitable for different applications, building layouts, purposes, safety regulations, etc.

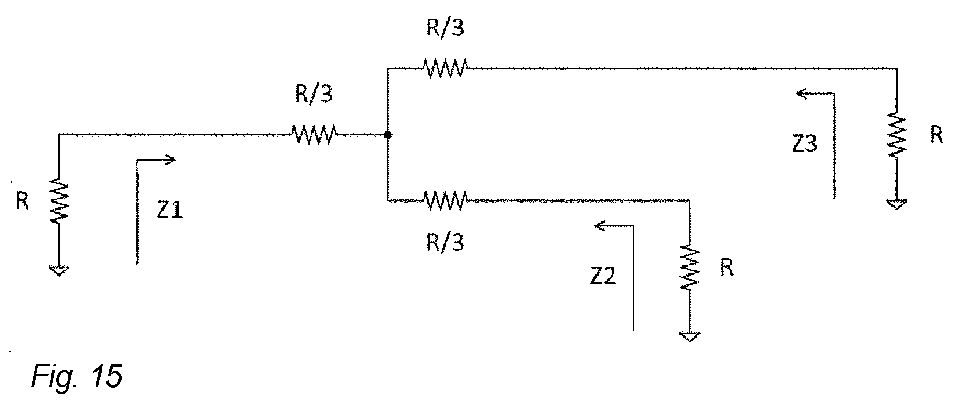

Impedance matching in a Y-splitter 39, as for example suitable for a branched powered audio bus as shown figure 13, can be established using three identical impedances, also called a "hairball network" as illustrated in figure 15 (single ended for the sake of simplicity). Seen for any end of this star configuration, the impedances Z1, Z2 and Z3 equals R/3 + (R/3+R)/2 = R, which ensures that reflection related problems are minimized. However, the network introduces an attenuation of 6dB from one branch end to another.

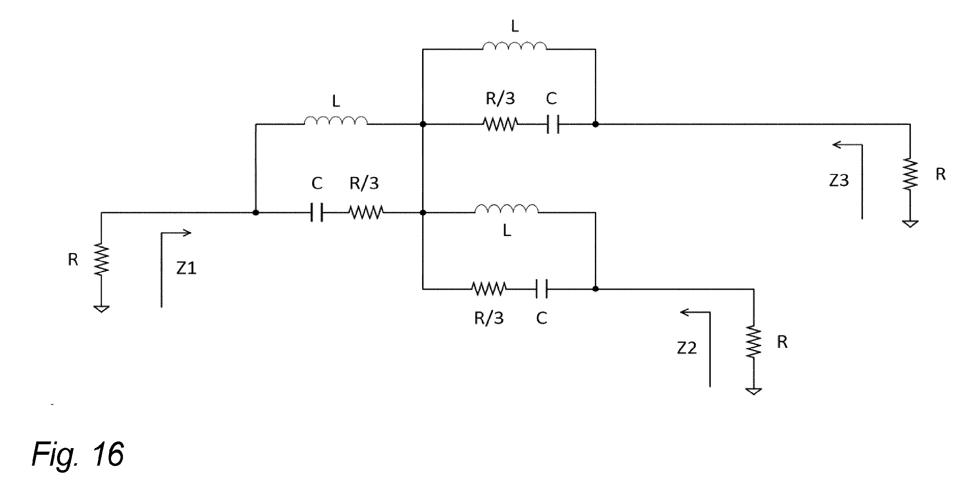

For a 2-line DC powered bus, the pure resistor based approach is not suitable, since the relatively small resistors will introduce a significant power loss when drawing current through the bus. To circumvent that problem, the impedance matching means may be designed so that impedance matching resistors only "exist" for AC, leaving out DC. One solution is illustrated in figure 16, where resistors are DC decoupled using capacitors and the DC power distribution is handled through the inductors L.

Figure 17 illustrates a layout of the audio system 33 according to an embodiment of the invention. A first bus driver 1a controls nodes 20a-20d on a first powered audio bus 5a and a second bus driver 1b controls nodes 20e-20h on a second powered audio bus 5b.

The nodes 20a-20h may be located in one or more environments. An environment may for example be defined by a room. A zone including a subset of nodes 20 may be defined more or less related to environments and bus, and provides an abstraction level for assigning any loudspeaker to zones regardless of their environment and bus topology. Typically, assignment to zones is used to broadcast the same audio or controls to the nodes of a common zone. It should be mentioned that the grouping of subsets of nodes 20 in zones or environment may include nodes 20 controlled by different bus drivers 1. Hence a zone or subset of nodes 20 should be understood as one or more nodes 20 grouped and thereby playing the same audio signal.

Figure 17 illustrates two daisy chains of nodes 20a-20d and 20e-20h distributed over two environments, rooms 37 and 38. The first room 37 may be divided in two zones 37a and 37b e.g. based on use of the room 37, hence zone 37a may be a busy and noisy area and zone 37b is a relaxing area of room 37. Room 38 represents only one zone denoted 38a.

Now if different audio signals are to be broadcasted in environments 37 and 38, the nodes 20a-20h have to be divided in zones. Hence zone 1 comprising node 20a-20c and 20h, zone 2 comprising nodes 20d and 20e and zone 3 comprising nodes 20f and 20g.

The subset of nodes representing zones 1-3 is either automatically or manually configured to the respective zones facilitating the playing of different audio or the same audio at different sound levels. Playing an audio signal should be understood as converting an audio signal to speech, music, tones, etc. audible at least to humans.

In an embodiment, the nodes may be pre-configured during installation, for example with regard to zone assignment, audio channel selection, audio level, or other basic configuration parameters. The pre-configuration of a node may for example be facilitated by the nodes comprising a hardware selector and/or a programmable memory, which the installer may use to set one or more parameters, and which may be read by internal circuitry after power-on. For example, a rotary encoder, a DIP-switch (DIP: dual inline package), an NFC-receiver (NFC: near field communication), an RFID-tag (RFID: radio frequency identification), etc., may be provided at the node. During installation, there is access to the pre-configuration selector at the node, and the installer may pre-configure for example which zone the node initially belongs to, and an initial attenuation level. The pre-configuration may even be applied before the node is connected to the powered audio bus, and thereby before it receives any power. The settings may be part of an installation project plan or be decided spontaneously by the installer. However, as such pre-configuration is prone to human error and/or change of mind after closing off the installation, ceiling, wall, etc., an embodiment comprising a verification of the pre-configuration is therefore very advantageous, as is a preferred embodiment allowing the bus driver to overrule the pre-configuration of a node.

To facilitate the automatic configuration of zones, the bus drivers 1a and 1b may be connected either directly or via an external audio source 8 or external controller 10.

Accordingly an aggregated environment comprises a set of environments 37, 38 each comprising one or more of the loudspeakers (also referred to as nodes) of the loudspeaker system. Each environment comprises a physical area e.g. a hallway, a conference room, a restaurant or a similar physically delimited environment. In other words, the environments are defined by physical structures serving as acoustical and/or visual obstacles such as walls, floors and ceilings, doors and windows, partitions, plants, curtains, or even relatively large distances of space. The aggregated environment may thereby for example be an office building, restaurant building, etc., comprising a set of environments. The aggregated environment is limited to the aggregation of environments comprising loudspeakers of the loudspeaker system, and may thus be limited to a part of a building, floor, etc., and comprise a single environment or several environments. The loudspeaker system may comprise loudspeakers installed in one or more environments.

The topology of the loudspeaker system (also referred to as daisy chained nodes or audio system) in terms of electrical or communicative connections may often be quite unrelated to the topology of the environments.

In an embodiment, sound measurements may be analyzed for information about acoustic obstacles obtained by analyzing when certain microphones do not hear or only vaguely hear the sound from certain loudspeakers, thereby enabling a grouping of the loudspeakers in different of said environments, as well as information about reflective surfaces enabling estimating distances between loudspeakers and surfaces, thereby making it possible in certain embodiments to estimate the dimensions in two or three dimensions of the environments, e.g. the dimensions and shape of a room.

In an embodiment, visual information e.g. from a camera, information about physical properties from distance measurements, e.g. by laser or accelerometer, positioning systems or blue prints or other formal data or manually inserted data, etc., may be analyzed to estimate the dimensions of environments and relative or absolute positions of the loudspeakers. In an advantageous embodiment, automatically or manually determined information about environments may be used to make a basic suggestion or basic starting configuration for how the loudspeakers could be divided into loudspeaker zones for the subsequent normal operation. In many practical applications, the basic starting configuration established this way will be perfectly suited for most uses.

The topology of the environments may not necessarily correspond to the topology of the loudspeaker zones. In other words, network-topology, loudspeaker connections, environments and loudspeaker zones are non-constrained, but at least partly overlapping.

In an advanced embodiment, the assigned loudspeaker zones may not be static or permanent, but may be changed according to the application of the room or hall. Applications such as "live concert", "conference", or "lounge bar" may require the loudspeakers to fulfill different roles.

As can be seen from the above description, the inventive audio system 33 has several advantages of which the feature of power and bidirectional data transmitted over a two wired powered audio bus 5 between the bus driver 1 and the nodes 20 and the polarity-indifference of the two wires 34a, 34b are especially advantageous.

Of these advantages could at least be mentioned individual fault monitoring of loudspeaker 32, individual gain, delay and equalizing with high granularity, dynamic paging and grouping of nodes 20, multiple node types on the same daisy chain, more than one zone or channel on the same daisy chain, possibility of retrofitting or updating existing audio systems without need of installing new transmission line between nodes of the existing system, equal audio quality in first and last node 20 of the network, facilitates automatically debugging locating at which node an error may be present and use of thinner conductors 34 compared to traditional comparable audio systems.

The reason for being able to use thinner conductors 34 at the present audio system 33 compared to e.g. 70VRMS is that at 70VRMS, the RMS of the audio signal is significantly lower than at the 40V - 50V DC system suggested by the present invention. Hence the currents and thereby losses of the present audio system 33 are reduced significantly as compared to a 70VRMS system.

Compared to the traditional 70/100V installation technology, at least the following advantages exist:

- Cabling may be phase indifferent. Swapped conductors in the cable will not cause 180 degree phase change for the resulting acoustical output.
- More than one audio channel may be transported on a single cable (twisted pair) simultaneously. This means that multiple zones can be covered using a single daisy chain (cable).
- The system may incorporate a node enumeration process that establishes a list holding all bus nodes including the physical (electrical connection) sequence from first to last node on the bus. This list ensures that all electrical connections are functioning. Deviations from the list obtained during last power-up, may be reported (automatically via email or similar) to a given location.
- The system may incorporate a self-test feature, which tells the installer/maintenance personnel where the last functional node on the cable is located.
- Each node may implement individual level control, EQ and other DSP related functions which can be remotely controlled. This is an advantage when the system is installed in an environment where it would be advantageous to shift "sound profile" as function of the environment, e.g. in a restaurant, where it would be desirable to adjust sound level in only a sub-section of the total restaurant space for some occasions - or even differentiated audio material (corresponding to dynamic/virtual routing capability).
- The status of each individual node can be monitored, meaning that loudspeaker (and amplifier) status (temperature, power consumption, impedance) can be continuously followed.
- The sonic quality may be improved, due to the absence of the audio power transformer, which typically requires that the audio signal is high-pass filtered to avoid distortion for low frequencies. Driving the loudspeaker directly without this transformer will enable a richer and more tight bass reproduction.
- The power loss in the cabling will be lower compared to a 70/100V system when reproducing audio material. For typical audio signals, the crest factor is 12dB. This means that the RMS voltage for full scale audio in a 70V (100V peak) system is only 25V, compared to the proposed system, maybe having 48VDC (=48Vrms) on the bus. This difference will cause a current in the 70V system, that are roughly twice the current in the 48V system, turning into four times higher cable power loss ($P = I^2 \cdot R$), assuming similar cable thickness (resistive conduction loss). This fact may be utilized into either (1) using thinner cables, or (2) offer increased cable length for a given cable dimension (and acceptable loss).
- The system may further comprise several other types of sensors not directly related to the audio reproduction. Examples may be light sensors, smoke sensors, gas sensors (CO), proximity sensors or any other kind of sensor. Information from these sensors may be relayed back to the bus driver 1 and further onto the internet and/or other equipment connected to the driver and/or bus.

- The bus peak voltage is lower compared to 70V (100V peak) or 100V (140V peak). Using 48V means that the system may be mounted by "anybody", since 48V is considered non-hazardous, whereas the installation of 70/100V systems may require certified personnel.

The description of the figures has focused on the elements providing a feature to the invention. Therefore it should be mentioned that other not mentioned elements may also be implemented in various embodiments. Such elements could be capacitors mounted between the transmission conductors 34 of the powered audio bus 5 and the driver processing unit 11, the data transmitter and receiver of the bus driver 1 and the transmission conductors 34 of the powered audio bus 5 which is used as a filter for preventing the DC power signals from interfering with the processing of the data.

In the same way, an inductor may be present between the power supply 3 of the bus driver 1, the power supply 35 of the node 20 and the transmission conductors 34 of the powered audio bus 5 to filter and ensure that the data communication does not interfere with the power supply.

It should be mentioned that any elements of any of the figures referred to in this description may be combined to obtain an audio system 33 complying with specific requirements. Further, many elements of the figures are state of the art elements and are therefore not described in details in that they and their functions are known by the skilled person.

## Claims

1. A method for determining spatial relations in a loudspeaker system comprising a central controller (201), multiple loudspeakers (A-G; A-H; 202a, 202b) and multiple microphones (203a, 203b), the method comprising:

   - using the multiple loudspeakers to produce sound (S);
   - using the multiple microphones to measure said sound;
   - determining spatial relations between said loudspeakers on the basis of the measured sound;
   - assigning said multiple loudspeakers to loudspeaker zones (Z1-Z4) on the basis of said determined spatial relations; and
   - controlling audio of said multiple loudspeakers in accordance with said assigned loudspeaker zones.

2. The method for determining spatial relations according to claim 1, wherein said spatial relations comprises a spatial arrangement.

3. The method for determining spatial relations according to any of the preceding claims, wherein said microphones are individually located together with individual of said loudspeakers.

4. The method for determining spatial relations according to any of the preceding claims, wherein said method further comprises determining a spatial relation between a loudspeaker and a reflective surface and a microphone and said reflective surface.

5. The method for determining spatial relations according to any of the preceding claims, wherein said method further comprises determining a spatial arrangement of a reflective surface reflecting said produced sound.

6. The method for determining spatial relations according to any of the preceding claims, wherein said spatial arrangement is determined on the basis of the most significant of said spatial relations.

7. The method for determining spatial relations according to any of the preceding claims, wherein said method further comprises determining a spatial arrangement of at least a part of an aggregated environment comprising said loudspeaker system, the aggregated environment comprising one or more environments, and wherein said assigning to loudspeaker zones is based on said determined spatial arrangement of at least a part of an aggregated environment.

8. The method for determining spatial relations according to any of the preceding claims, wherein the loudspeakers are pre-assigned to loudspeaker zones, and wherein the step of assigning said multiple loudspeakers to loudspeaker zones comprises verifying whether the pre-assignment for a loudspeaker to a loudspeaker zone matches an assignment based on said determined spatial relations.

9.  The method for determining spatial relations according to any of the preceding claims, wherein said sound is produced by multiple loudspeakers simultaneously, and the spectral content of the individual sounds are substantially different.

10. The method for determining spatial relations according to any of the preceding claims, wherein said individual sound comprises embedded information of an identifier of said loudspeaker.

11. The method for determining spatial relations according to any of the preceding claims, wherein the method comprises providing a mobile device controlled by an operator and measuring said sound by said mobile device.

12. The method for determining spatial relations according to any of the preceding claims, wherein the loudspeaker system comprises one or more powered audio buses and associated bus drivers, the multiple loudspeakers being comprised by loudspeaker nodes of said powered audio buses, and the central controller being connected to or integrated with said bus drivers.

13. A method for verifying a loudspeaker system installation, the loudspeaker system installation comprising a central controller (201), multiple loudspeakers (A-G; A-H; 202a, 202b) and multiple microphones (203a, 203b); the method comprising:

    • obtaining auxiliary information;
    • using the multiple loudspeakers to produce sound (S);
    • using the multiple microphones to measure said sound;
    • verifying the loudspeaker system installation on the basis of said auxiliary information and said measured sound; and
    • providing at a user interface or communication interface a result of said verifying.

14. The method for verifying a loudspeaker system installation according to claim 24, wherein the auxiliary information comprises predetermined reference information associated with the loudspeaker system installation.

15. A method for determining spatial relations in a loudspeaker system comprising a central controller (201) and multiple loudspeakers (A-G; A-H; 202a, 202b), the method comprising:

    • using the multiple loudspeakers to produce sound (S);
    • using a microphone of a mobile device to measure said sound;
    • determining spatial relations between said loudspeakers on the basis of the measured sound;
    • assigning said multiple loudspeakers to loudspeaker zones (Z1-Z4) on the basis of said determined spatial relations; and
    • controlling audio of said multiple loudspeakers in accordance with said assigned loudspeaker zones.

Fig. 1a

Fig. 1b

Fig. 1c

Fig. 1d

EP 3 148 224 A2

200b

200a

POSITION A | POSITION B

| CONTROLLER 201 | → | LOUDSPEAKER 202a | | LOUDSPEAKER 202b |

S

MICROPHONE 203a | MICROPHONE 203b

SIGNAL A 204a | SIGNAL B 204b

S

*Fig. 2*

204a

Signal A

*Fig. 3a*

204b

Signal B

*Fig. 3b*

*Fig. 4*

*Fig. 5*

*Fig. 6*

*Fig. 7*

S1
1. **Central controller initiates procedure** to investigate/verify acoustic properties or layout of loudspeakers in the system

S2
2. One or more selected **loudspeakers plays a given sound**

S3
3. Multiple **microphones in the system receives the sound**

S4
4. The **received sound is preprocessed** locally

S5
5. The **preprocessed data is sent back to the central controller**

S6
6. **Central controller analyses the combined data received**

*continue on Fig. 8b...*

*Fig. 8a*

*...continued from Fig. 8a*

| 7a. **Spatial layout** of loudspeakers, per environment | 8a.<br>* Use to associate node ID with layout<br>* Use to verify proper installation in the environments<br>* Use to determine physical position of a certain node on bus |

*S7a*       *S8a*

| 7b. **Signal/noise** per loudspeaker | 8b.<br>*A low or significantly changed S/N may indicate improper installation or need for maintenance |

*S7b*       *S8b*

| 7c. **Zone assignment** suggestion | 8c.<br>* Approve the automatic zone assignment<br>* Adjustment of the assignment manually, before approval<br>* Use to verify intended layout |

*S7c*       *S8c*

| 7d. **Verify against provided info** | 8d.<br>* Verify the number of speakers (per environment) with correct functionality and proper connection to bus<br>* Verify against earlier measurements |

*S7d*       *S8d*

*Fig. 8b*

*Fig. 9*

*Fig. 10*

*Fig. 11*

EP 3 148 224 A2

Fig. 12

Fig. 13

EP 3 148 224 A2

Fig. 14

*Fig. 15*

Fig. 16

EP 3 148 224 A2

**Fig. 17**